# EUROPEAN PATENT SPECIFICATION

(11) **EP 1 047 169 B1**
(45) Date of publication and mention of the grant of the patent: **29.08.2007**
(21) Application number: 00107978.9
(22) Date of filing: 18.04.2000
(51) Int. Cl.: H02B 13/035

(54) **Vacuum insulated switch gear**
Vakuumisolierte Schaltanlage
Installation de commutation sous vide

(30) Priority: 19.04.1999 JP 11137999; 24.11.1999 JP 33255199
(43) Date of publication of application: 25.10.2000
(73) Proprietor: MITSUBISHI DENKI KABUSHIKI KAISHA, Chiyoda-ku Tokyo 100-8310 (JP)
(72) Inventor: Sato, Toshifumi, Chiyoda-ku, Tokyo 100-8310 (JP); Maruyama, Toshimasa, Chiyoda-ku, Tokyo 100-8310 (JP); Miyamoto, Seiichi, Chiyoda-ku, Tokyo 100-8310 (JP); Itotani, Takayuki, Chiyoda-ku, Tokyo 100-8310 (JP); Kobayashi, Minoru, Chiyoda-ku, Tokyo 100-8310 (JP)
(74) Representative: HOFFMANN EITLE

(56) References cited:
- EP-A- 0 570 688
- EP-A- 0 893 811

## Description

### BACKGROUND OF THE INVENTION

The present invention relates to a switch gear comprising a vacuum container; and one or more switching devices respectively stored in said vacuum container for contacting a fixed electrode with a movable electrode and disconnecting thereof from each other, said fixed and movable electrodes respectively being connected to different external conductors. Such a switch gear may include, in the interior portion of a vacuum container, an integrally unified function unit which is composed of a plurality of switching devices such as a main circuit switching device for contacting a bus side conductor with a load side conductor and disconnecting them from each other and a grounding switching device for contacting the load side conductor with a grounding conductor and disconnecting them from each other.

A vacuum switch is known from EP 0 893 811.

A switch gear, which is used to distribute power received from a bus to various load devices and other electric chambers, is structured such that not only connecting conductors such as a bus side conductor to be connected to a bus and a load side conductor to be connected to a transmission cable for power transmission to a load, but also various devices such as a main circuit switching device for contacting the bus side conductor with the load side conductor and disconnecting them from each other, a grounding switching device for grounding the load side conductor, and a control device necessary for monitoring and controlling these devices are disposed in the interior portion of a housing which is made of metal and is grounded

As an example of this type of switch gear, there is known a switch gear structured such that, as disclosed in the Examined Japanese Patent Application Publication No. Hei 7-28488, it includes a function unit composed of a main circuit switching device and a grounding switching device unified together with part of connecting conductors as an integrated body, this function unit is disposed in the interior portion of a box, and the function unit need only be connected to a bus and a transmission cable.

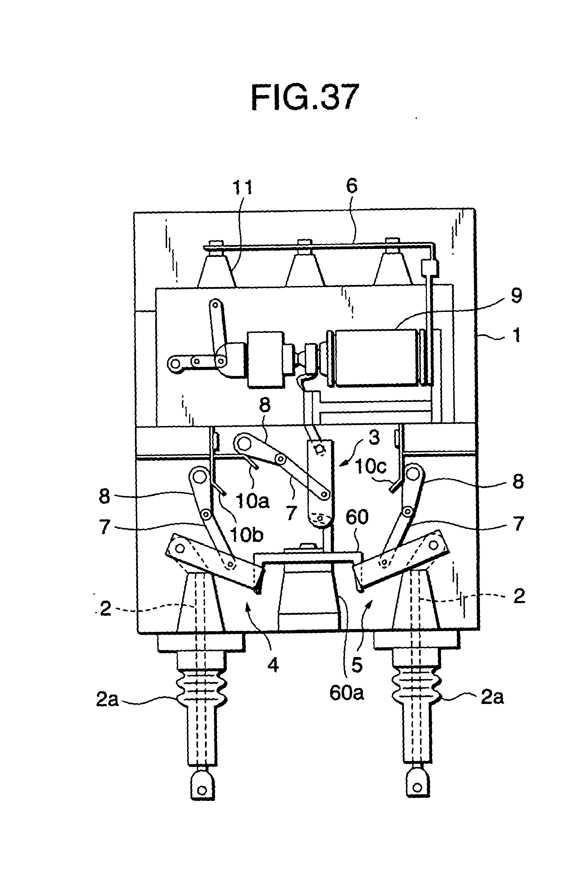

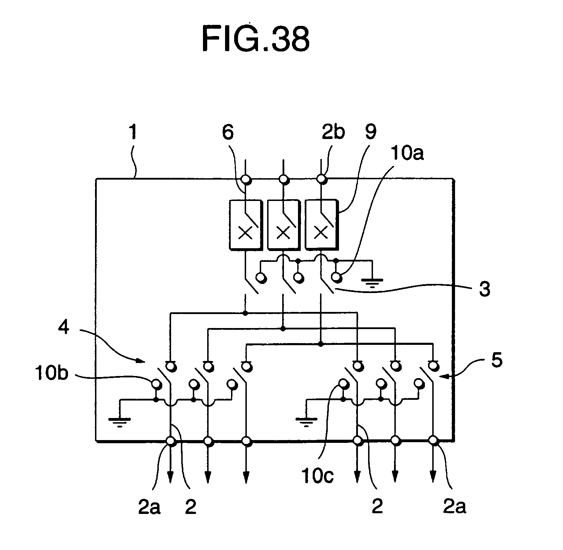

Now, Fig. 37 is a plan section view of the structure of the main portions of the above-cited switch gear, and Fig. 38 is an electrical connection view of the present switch gear. As shown in Fig. 37, the switch gear comprises a transmission cable connecting bushing 2a, which extends not only through part of the peripheral wall of a metal-made container 1 with an insulating gas enclosed therein but also inwardly and outwardly of the present container 1 peripheral wall part, and a bus connecting bushing 2b which similarly extends not only through part of the peripheral wall of a metal-made container 1 with an insulating gas enclosed therein but also inwardly and outwardly of the present container 1 peripheral wall part; and, in the interior portion of the container 1, there are disposed first, second and third switching devices 3, 4 and 5 as well as a vacuum arc extinguishing chamber 9.

A bus side branch conductor 6, which is connected to an externally disposed bus (not shown) through the bushing 2b, is supported by an insulating support insulator 11 fixed to part of the peripheral wall of the container 1 and is disposed in the interior portion of the container 1; the bus side branch conductor 6 is connected, through a switching device (not shown) disposed in the interior portion of the vacuum arc extinguishing chamber 9 and the first switching device 3, to an intermediate conductor 60 fixed to and supported by an insulating support insulator 60a fixedly secured to part of the peripheral wall of the container 1; the branch conductor 6 is divided by the intermediate conductor 60 to branch in two directions; and, the two branches are respectively connected through the second and third switching devices 4 and 5 to load side conductors 2 respectively supported by their associated bushings 2a, and are further connected to externally disposed transmission cables (not shown) through the present load side conductors 2.

Although there is shown only the circuit section which corresponds to one phase, as shown in Fig. 38, the complete circuit of this switch gear is composed of three phases; that is, in the switch gear, there are disposed the above-mentioned bushings 2a, 2b as well as the above-mentioned first, second, and third switching devices 3, 4 and 5 by one set or by twos for each phase.

Each of the switching devices 3, 4 and 5 includes an oscillating electrode which can be oscillated in response to the operation of its associated operation mechanism that is transmitted through a metal link 8 and an insulation link 7. Specifically, the first switching device 3 is structured such that, according to the oscillation position of its oscillating electrode, it can realize a closed position, a grounding position and a disconnecting position. Here, the closed position is a position where the output electrode of the switching device disposed in the interior portion of the vacuum arc extinguishing chamber 9 is connected to a fixed electrode provided at and projected from the corresponding position of the intermediate conductor 60; the grounding position is a position where the oscillating electrode is connected to a grounding conductor 10a; and, the disconnecting position is an intermediate position between the closed and grounding positions and is away from the fixed electrode and grounding conductor 10a.

Also, the second and third switching devices 4 and 5 are respectively structured such that, according to the oscillation positions of their respective oscillating electrodes, they can realize their respective three positions similar to the first switching device 3, between the load side conductors 2 and their associated fixed electrodes and grounding conductors 10b, 10c respectively provided at and projected from the corresponding positions of the intermediate conductor 60.

According to the above structure, since the main circuit switching portion for contacting the bus side branch conductor 6 with the load side conductor 2 and disconnecting them from each other as well as the grounding switching portion for grounding the load side conductor 2, together with the connecting conductors, are disposed in the interior portion of the container 1, the bus side branch conductor 6 may only be connected through the bushing 2b to the bus provided externally of the container 1 and the load side conductor 2 may only be connected through the bushing 2a to the transmission cable provided externally of the container 1.

However, since the above-mentioned conventional switch gear is assembled in such a manner that the first, second and third switching devices 3, 4 and 5 as well as vacuum arc extinguishing chamber 9 are mounted in the interior portion of the large-sized container 1 into which an insulating gas is to be enclosed, whereas the operation mechanisms are mounted on the exterior portion of the container 1, the efficiency of the assembling operation is poor and the switch gear becomes large in size.

Also, generally, the wiring pattern of transmission cables varies depending on the installation places of a switch gear and, therefore, the switch gear must be structured so as to be able to adapt itself to various wiring patterns flexibly. In the conventional switch gear, since the position relationships between the first, second and third switching devices 3, 4, 5, and vacuum arc extinguishing chamber 9 put restrictions on the arrangement of the transmission cable connecting bushings 2a and bus connecting bushings 2b, the wiring pattern of the transmission cables is limited, which makes it impossible to meet the above-mentioned requirement.

And, the above-mentioned restrictions make it difficult to change the arrangement of the respective parts of the switch gear flexibly and thus, according to the prior art, it is difficult to structure a switch gear that can be installed in a space on part of which spatial restrictions such as a height restriction are placed.

Also, because an SF6 gas used as the insulating gas is specified as one of the gases that are regulated on discharge for prevention of global warming, there arises a new problem as to the handling and control of the SF6 gas. This increases the costs of the switch gear when it is manufactured and inspected as well as the cost necessary when the switch-gear-related facilities are abolished.

Hereinafter is described a special-height metal closed type switch gear for receiving and distributing power and, in particular, to the dimensions and arrangement of panels used in such switch gear.

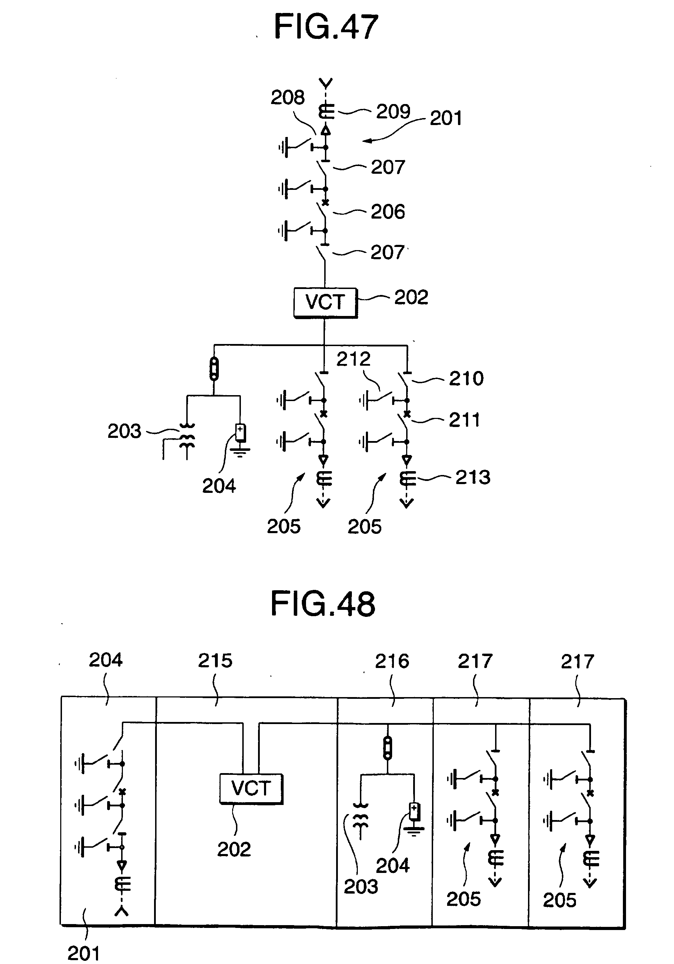

Conventionally, there are known various power receiving systems, and Fig. 47 is a circuit diagram of an example of a skeleton of a one-circuit power receiving system. The one-circuit power receiving system is composed of an incoming part or a power receiving part 201, a power supply-demand meter transformer (which is hereinafter referred to as VCT) supplied by a power company and connected to the power receiving part 201, a meter transformer 203, a lightning conductor 204, and a plurality of feeder parts 205.

The light receiving part 201 comprises a breaker 206, a pair of disconnecting switches 207 respectively connected in series to the two sides of the breaker 206, a plurality of grounding switching devices 208, and a meter current transformer 209. Each feeder part 205 includes a disconnecting switch 210, a grounding switching device 211, a breaker 212, and a meter current transformer 213.

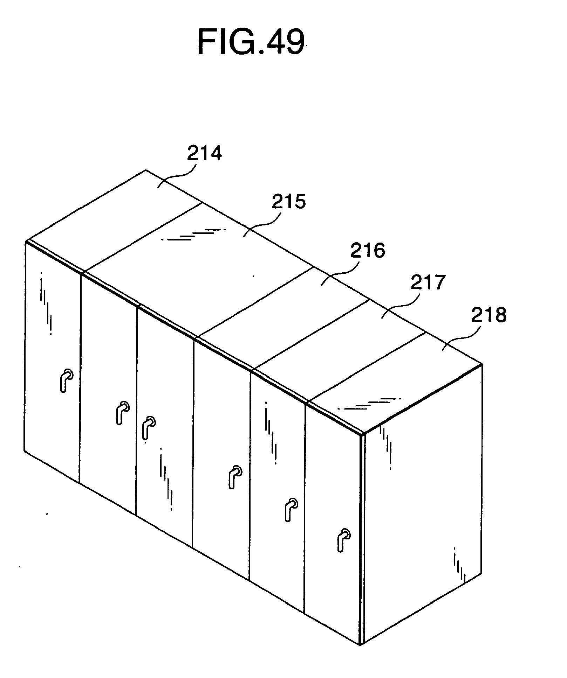

Fig. 48 is a block skeleton view (plan structure view) of an example in which the skeleton shown in Fig. 47 is structured using a conventional special-height metal closed type switch gear, and Fig. 49 is a perspective view of the appearance of the conventional special-height metal closed type switch gear shown in Fig. 48. The power receiving part 201 is stored in an incoming panel 214, while a VCT 202 is stored in a VCT panel 215. The meter transformer 203 and lightning conductor 204 are respectively stored in a meter transformer and lightning conductor panel 216. The feeder parts 205 are respectively stored in a feeder panel 217.

The incoming panel 214, VCT panel 215, meter transformer and lightning conductor panel 216, and feeder panel 217 are disposed in such a manner that they are arranged in a row in the horizontal direction. The depth and height dimensions of the respective panels 214 to 217 are determined to the depth and height dimensions of the VCT panel 215 that are the largest dimensions among the internal equipment structures of the switch gear, and they are set equal to one another. However, the width dimensions of the respective panels are set to the width dimensions of devices respectively stored in the interior portions of their associated panels.

In the above-structured conventional special-height metal closed type switch gear, since the depth and height dimensions of the incoming panel 214, meter transformer and lightning conductor panel 216 and feeder panel 217 are determined to the depth and height dimensions of the largest VCT panel 215, the whole structure of the switch gear is large in size, which results in the expensive cost of the switch gear. Also, when these panels 214 to 217 are carried into a site for installation, it is impossible to carry them into an ordinary-sized elevator because of their large height, which requires facilities such as a crane. This also results in the expensive cost of the switch gear. Further, since the respective panels 214 to 217 are arranged in a row with their depth dimensions matched to one another, the freedom of arrangement of the switch gear is small and, depending on the shape of an electric room, it is difficult to arrange the switch gear in the electric room.

Embodiments described hereinafter aim at eliminating the above drawbacks found in the conventional special-height metal closed type switch gear. Accordingly, such embodiments provide a special-height metal closed type switch gear which not only can be reduced in size as a whole to thereby be able to reduce the manufacturing cost thereof but also can be arranged with flexibility.

### SUMMARY OF THE INVENTION

The present invention relates to a switch gear as initially defined and is characterised in that said switching devices being molded together with said vacuum container by an insulator; and a plurality of terminals respectively disposed within said vacuum container to be connected to external conductors being projected from said molded portion.

Embodiments of the present invention aim at eliminating the above-mentioned drawbacks found in the conventional switch gear. Accordingly, at least one embodiment of the invention provides a switch gear in which a plurality of switching devices are stored in a molded vacuum container and terminals for connection with external conducts are disposed in the molded portion to thereby be able to reduce the size thereof greatly over the conventional switch gear.

Also, at least one embodiment of the invention provides a switch gear in which terminals for connection with external conductors are disposed directly in a molded portion to thereby eliminate the need for provision of bushings for connection with the external conductors so as to be able to arrange the switch gear flexibly.

In attaining the above object, according to a 1^{st} embodiment of the invention, there is provided a switch gear, comprising: a vacuum container; one or more switching devices respectively stored in the vacuum container for contacting a fixed electrode with a movable electrode and disconnecting them from each other, the fixed and movable electrodes respectively being connected to different external conductors, the switching devices being molded together with the vacuum container by an insulator; and, a plurality of terminals respectively disposed within the vacuum container so as to be connected to external conductors being projected from said molded portion.

According to a 2^{nd} embodiment of the invention, in a switch gear as set forth in the 1^{st} embodiment of the invention, the vacuum container includes a plurality of vacuum containers disposed side by side, a plurality of switching devices to be operated in the same direction when they are switched are disposed side by side within each vacuum container, terminals to be connected to first external conductors are projected in the same direction as the operation direction of the switching operations of the switching devices and are disposed in a direction crossing the projecting direction thereof in such a manner that they are different in position from one another in their associated vacuum containers, terminals to be connected to second external conductors through T-type or L-type connectors are projected in a direction crossing the above-mentioned operation direction and are disposed in such a manner that they are coincident in position with one another in their associated vacuum containers.

According to a 3^{rd} embodiment of the invention, in a switch gear as set forth in the 1^{st} embodiment of the invention, the vacuum container includes a plurality of vacuum containers disposed side by side, a plurality of switching devices to be operated in the same direction when they are switched are disposed side by side within each vacuum container, terminals to be connected to first external conductors are projected in a direction different from the operation direction of the switching operations of the switching devices and are disposed in a direction crossing the projecting direction thereof in such a manner that they are different in position from one another in their associated vacuum containers, and terminals to be connected to second external conductors through T-type or L-type connectors are projected in the opposite direction to the projecting direction of the first external conductors and are disposed in such a manner that they are coincident in position with one another in their associated vacuum containers.

According to a 4^{th} embodiment of the invention, in a switch gear as set forth in the 1^{st} embodiment of the invention, the vacuum container includes a plurality of vacuum containers disposed side by side, a plurality of switching devices to be operated in the same direction when they are switched are disposed side by side within each vacuum container, terminals to be connected to first external conductors are projected in the same direction as the operation direction of the switching operations of the switching devices and are disposed in a direction crossing the projecting direction thereof in such a manner that they are different in position from one another in their associated vacuum containers, terminals to be connected to second external conductors through T-type or L-type connectors are projected in a direction crossing the above-mentioned operation direction and are disposed in a direction crossing the projecting direction in such a manner that they are different in position from one another in their associated vacuum containers.

According to a 5^{th} embodiment of the invention, in a switch gear as set forth in the 1^{st} embodiment of the invention, the vacuum container includes a plurality of vacuum containers disposed side by side, a plurality of switching devices to be operated in the same direction when they are switched are disposed side by side, terminals to be connected to first external conductors are projected in a direction different from the operation direction of the switching operations of the switching devices and are disposed in a direction crossing the projecting direction thereof in such a manner that they are different in position from one another in their associated vacuum containers, and terminals to be connected to second external conductors through T-type or L-type connectors are projected in the opposite direction to the projecting direction of the first external conductors and are disposed in a direction crossing the projecting direction in such a manner that they are coincident in position with one another in their associated vacuum containers.

An embodiment described hereinafter provides a switch gear wherein the vacuum container includes a plurality of vacuum containers disposed side by side, a plurality of switching devices to be operated in the same direction when they are switched are disposed side by side within each vacuum container, terminals to be connected to first external conductors are projected in the same direction as the operation direction of the switching operations of the switching devices and are disposed in a direction crossing said projecting direction thereof in such a manner that they are different in position from one another in their associated vacuum containers, and terminals to be connected to second external conductors through I-type connectors are projected in the same direction as the projecting direction of the first external conductors and are disposed in such a manner that they are coincident in position with one another in their associated vacuum containers.

An embodiment described hereinafter provides a switch gear wherein the vacuum container includes a plurality of vacuum containers disposed side by side, a plurality of switching devices to be operated in the same direction when they are switched are disposed side by side within each vacuum container, terminals to be connected to first external conductors are projected in a direction crossing the operation direction of the switching operations of the switching devices and are disposed in a direction crossing said projecting direction thereof in such a manner that they are different in position from one another in their associated vacuum containers, and terminals to be connected to second external conductors through I-type connectors are projected in the same direction as the above-mentioned operation direction and are disposed in such a manner that they are coincident in position with one another in their associated vacuum containers.

An embodiment described hereinafter provides a switch gear wherein the vacuum container includes a plurality of vacuum containers disposed side by side, a plurality of switching devices to be operated in the same direction when they are switched are disposed side by side within each vacuum container, terminals to be connected to first external conductors are projected in the same direction as the operation direction of the switching operations of the switching devices and are disposed in a direction crossing said projecting direction thereof in such a manner that they are different in position from one another in their associated vacuum containers, and terminals to be connected to second external conductors through T-type, L-type or I-type connectors are projected in the same direction as the projecting direction of the first external conductors and are disposed in a direction crossing the projecting direction in such a manner that they are different in position from one another in their associated vacuum containers.

An embodiment described hereinafter provides a switch gear wherein the vacuum container includes a plurality of vacuum containers disposed side by side, a plurality of switching devices to be operated in the same direction when they are switched are disposed side by side within each vacuum container, terminals to be connected to first external conductors are projected in a direction crossing the operation direction of the switching operations of the switching devices and are disposed in a direction crossing the projecting direction thereof in such a manner that they are different in position from one another in their associated vacuum containers, and terminals to be connected to second external conductors through T-type, L-type or I-type connectors are projected in the same direction as the above-mentioned operation direction and are disposed in a direction crossing the projecting direction in such a manner that they are different in position from one another in their associated vacuum containers.

According to a 6^{th} embodiment of the invention, in a switch gear as set forth in the 1^{st} embodiment of the invention, the vacuum container includes a plurality of vacuum containers disposed side by side, a plurality of switching devices to be operated in the same direction when they are switched are disposed side by side within each vacuum container, terminals to be connected to first external conductors are projected in the same direction as the operation direction of the switching operations of the switching devices and are disposed in a direction crossing the projecting direction thereof in such a manner that they are different in position from one another in their associated vacuum containers, and aerial connecting terminals to be connected at a given angle to second external conductors are projected in a direction crossing the above-mentioned operation direction.

An embodiment described hereinafter provides a switch gear wherein the vacuum container includes a plurality of vacuum containers disposed side by side, a plurality of switching devices to be operated in the same direction when they are switched are disposed side by side within each vacuum container, terminals to be connected to first external conductors are projected in the same direction as the operation direction of the switching operations of the switching devices and are disposed in a direction crossing the projecting direction thereof in such a manner that they are different in position from one another in their associated vacuum containers, and aerial connecting terminals to be connected linearly to second external conductors are projected in the same direction as the projecting portion of the first external conductor connecting terminals.

An embodiment described hereinafter provides a switch gear wherein the vacuum container includes a plurality of vacuum containers disposed side by side, two switching devices to be operated in the opposite directions when they are switched are disposed side by side within each vacuum container, terminals to be connected to first external conductors are projected in the same direction as the operation direction of the switching operation of the switching device to which the present terminals are directly connected and are disposed in a direction crossing the projecting direction thereof in such a manner that they are different in position from each other in their associated vacuum containers, and terminals to be connected to second external conductors through T-type or L-type connectors are projected in a direction crossing the operation direction of the switching operation of the switching device to which the present terminals are directly connected and are disposed in such a manner that they are coincident in position with each other in their associated vacuum containers.

According to a 7^{th} embodiment of the invention, in a switch gear as set forth in the 1^{st} embodiment of the invention, the vacuum container includes a plurality of vacuum containers disposed side by side, a plurality of switching devices to be operated in the same direction when they are switched are disposed side by side within each vacuum container, terminals to be connected to first external conductors are projected in a direction crossing the operation direction of the switching operations of the switching devices and are disposed in a direction crossing the projecting direction thereof in such a manner that they are different in position from one another in their associated vacuum containers, and terminals to be connected to second external conductors through T-type or L-type connectors are projected in the opposite direction as the above-mentioned operation direction and are disposed in such a manner that they are coincident in position with one.another in their associated vacuum containers.

An embodiment described hereinafter provides a switch gear wherein the vacuum container includes a plurality of vacuum containers disposed side by side, a plurality of switching devices to be operated in the same direction when they are switched are disposed side by side within each vacuum container, terminals to be connected to first external conductors are projected in a direction crossing the operation direction of the switching operations of the switching devices and are disposed in a direction crossing the projecting direction thereof in such a manner that they are different in position from one another in their associated vacuum containers, and terminals to be connected to second external conductors through T-type or L-type connectors are projected in the same direction as the above-mentioned operation direction and are disposed in such a manner that they are coincident in position with one another in their associated vacuum containers.

An embodiment described hereinafter provides a switch gear wherein the vacuum container includes a plurality of vacuum containers disposed side by side, a plurality of switching devices to be operated in the same direction when they are switched are disposed side by side within each vacuum container, terminals to be connected to first external conductors are projected in the same direction as the operation direction of the switching operations of the switching devices and are disposed in a direction crossing the projecting direction thereof in such a manner that they are different in position from one another in their associated vacuum containers, and terminals to be connected to second external conductors through T-type or L-type connectors are projected in the same direction as the above-mentioned operation direction and are disposed in such a manner that they are coincident in position with one another in their associated vacuum containers.

An embodiment described hereinafter provides a switch gear wherein the vacuum container includes a plurality of vacuum containers disposed side by side, two switching devices to be operated in the opposite directions when they are switched are disposed side by side within each vacuum container, terminals to be connected to first external conductors are projected in a direction crossing the operation direction of the switching operation of the switching device to which the present terminals are directly connected and are disposed in a direction crossing the projecting direction thereof in such a manner that they are different in position from each other in their associated vacuum containers, and terminals to be connected to second external conductors through T-type or L-type connectors are projected in the same direction as the operation direction of the switching operation of the switching device to which the present terminals are directly connected and are disposed in such a manner that they are coincident in position with each other in their associated vacuum containers.

An embodiment described hereinafter provides a switch gear wherein the vacuum container includes a plurality of vacuum containers disposed side by side, two switching devices to be operated in the opposite directions when they are switched are disposed side by side within each vacuum container, terminals to be connected to first external conductors are projected in a direction crossing the operation direction of the switching operation of the switching device to which the present terminals are directly connected and are disposed in a direction crossing the projecting direction thereof in such a manner that they are different in position from each other in their associated vacuum containers, and terminals to be connected to second external conductors through T-type or L-type connectors are projected in the same direction as the operation direction of the switching operation of the switching device to which the present terminals are directly connected and are disposed in such a manner that they are coincident in position with each other in their associated vacuum containers.

An embodiment described hereinafter provides a switch gear wherein the vacuum container includes a plurality of vacuum containers disposed side by side, two switching devices to be operated in the opposite directions when they are switched are disposed side by side within each vacuum container, terminals to be connected to first external conductors are projected in the same direction as the operation direction of the switching operation of the switching device to which said terminals are directly connected and are disposed in such a manner that they are coincident in position with each other in their associated vacuum containers, and terminals to be connected to second external conductors through I-type connectors are projected in the opposite direction to the projecting direction of the first external conductor connecting terminals and are disposed in such a manner that they are coincident in position with each other in their associated vacuum containers.

An embodiment described hereinafter provides a switch gear wherein the vacuum container includes a plurality of vacuum containers disposed side by side, a plurality of switching devices to be operated in the same direction when they are switched are disposed side by side within each vacuum container, terminals to be connected to first external conductors are projected in a direction crossing the operation direction of the switching operation of the switching devices and are disposed in such a manner that they are coincident in position with one another in their associated vacuum containers, and terminals to be connected to second external conductors through I-type connectors are projected in the opposite direction to the projecting direction of the first external conductor connecting terminals and are disposed in such a manner that they are coincident in position with one another in their associated vacuum containers.

According to a 8^{th} embodiment of the invention, in a switch gear as set forth in the 1^{st} embodiment of the invention, the vacuum container includes a plurality of vacuum containers disposed side by side and, in each vacuum container, terminals to be connected at a given angle to first external conductors are projected in a direction crossing the operation direction of the switching operations of switching devices respectively connected to the first external conductors and second external conductors, and terminals to be connected at a given angle to the second external conductors are projected in the opposite direction to the projecting direction of the first external conductor connecting terminals.

According to a 9^{th} embodiment of the invention, in a switch gear as set forth in the 1^{st} embodiment of the invention, the vacuum container includes a plurality of vacuum containers disposed side by side, a plurality of switching devices to be operated in the same direction when they are switched are disposed side by side within each vacuum container, aerial connecting terminals to be connected at a given angle to first external conductors are projected in a direction crossing the operation direction of the switching operations of switching devices, aerial connecting terminals to be connected at a given angle to second external conductors are projected in the opposite direction to the projecting direction of the first external conductor connecting terminals, and aerial connecting terminals to be connected at a given angle to third external conductors are projected in a direction crossing the projecting direction of the first and second external conductor connecting terminals.

An embodiment described hereinafter may provide a switch gear wherein the installation portions of the terminals of the molded portion are respectively formed in a recessed portion.

Hereinafter is described a special-height metal closed type switch gear structured such that an incoming panel, a feeder panel, and a meter transformer and lightning conductor panel, and a power supply-demand meter transformer panel are disposed side by side, wherein, of a plurality of panels including at least one of the incoming panel, feeder panel, and meter transformer and lightning conductor panel, the depth dimension of at least part of these panels is set equal to or smaller than one half of the depth dimension of a power supply-demand meter transformer panel; and, of all panels, at least part of them are disposed opposed to each other in such a manner that their back surfaces face each other.

Hereinafter is described a special-height metal closed type switch gear wherein devices disposed in the interior portions of the back-to-back disposed panels are structured such that they can be maintained from the front surfaces of the panels.

Hereinafter is described a special-height metal closed type switch gear wherein on the two sides of a power supply-demand meter transformer panel, there are disposed two VCT connecting panels respectively storing therein connecting conductors used to connect the power supply-demand meter transformer panel to a meter transformer and lightning conductor panel.

Hereinafter is described a special-height metal closed type switch gear wherein there are provided a meter transformer and lightning conductor panel, two feeder panels, and a bus converting panel for connecting the meter transformer and lightning conductor panel to one of the two feeder panels, the depth dimensions of the meter transformer and lightning conductor panel, two feeder panels and bus converting panel are respectively set equal to or smaller than one half of the depth dimension of a power supply-demand meter transformer panel, the meter transformer and lightning conductor panel and bus converting panel are, adjacently to one of two VCT connecting panels, disposed opposed to each other in such a manner that their respective back surfaces face each other, and, adjacently to the meter transformer and lightning conductor panel and bus converting panel, the two feeder panels are disposed opposed to each other in such a manner that their respective back surfaces face each other.

Hereinafter is described a special-height metal closed type switch gear wherein there are provided a meter transformer and lightning conductor panel, two feeder panels, and a bus converting panel for connecting the meter transformer and lightning conductor panel to one of the two feeder panels, the depth dimensions of the meter transformer and lightning conductor panel, two feeder panels and bus converting panel are respectively set equal to or smaller than one half of the depth dimension of a power supply-demand meter transformer panel, an incoming panel and bus converting panel are respectively disposed in such a manner that their respective back surfaces face the back surfaces of their associated VCT connecting panels, and, between the incoming panel and bus converting panel, the meter transformer and lightning conductor panel and two feeder panels are respectively disposed in such a manner that their respective back surfaces face the back surface of the power supply-demand meter transformer panel.

Hereinafter is described a special-height metal closed type switch gear wherein the height dimensions of the incoming panel, two feeder panels and meter transformer and lightning conductor panel are respectively set equal to or smaller than 1900 mm, and the box body of the power supply-demand meter transformer panel is structured so that it can be divided to division box bodies each having a height dimension equal to or smaller than 1900 mm.

### BRIEF DESCRIPTION OF THE DRAWINGS

To enable a better understanding of the invention, and to show how the same may be carried into effect, reference will now be made, by way of example only, to the accompanying drawings, in which:
Fig. 1 is a side section view of the structure of the main portions of an embodiment 1 of a switch gear according to the invention;
Fig. 2 is a front section view taken along the line II-II shown in Fig. 1;
Fig. 3 is a back view of a 3-unit row board employed in a switch gear according to the invention;
Fig. 4 is a bottom view of the 3-unit row board employed in a switch gear according to the invention;
Fig. 5 is a side section view of the structure of the main portions of a 2^{nd} embodiment of a switch gear according to the invention;
Fig. 6 is a side section view of the structure of the main portions of a 3^{rd} embodiment of a switch gear according to the invention;
Fig. 7 is a front section view taken along the line VII-VII shown in Fig. 6;
Fig. 8 is a side section view of the structure of the main portions of a 4^{th} embodiment of a switch gear according to the invention;
Fig. 9 is a side section view of the structure of the main portions of a 5^{th} embodiment of a switch gear according to the invention;
Fig. 10 is a side section view of the structure of the main portions of an embodiment of a switch gear;
Fig. 11 is a side section view of the structure of the main portions of an embodiment of a switch gear;
Fig. 12 is a bottom view of the structure of the main portions of an embodiment of a switch gear;
Fig. 13 is a side section view of the structure of the main portions of an embodiment of a switch gear;
Fig. 14 is a side section view of the structure of the main portions of an embodiment of a switch gear;
Fig. 15 is a side section view of the structure of the main portions of a 6^{th} embodiment of a switch gear according to the invention;
Fig. 16 is a side section view of the structure of the main portions of an embodiment of a switch gear;
Fig. 17 is a side section view of the structure of the main portions of an embodiment of a switch gear;
Fig. 18 is a side section view of the structure of the main portions of a 7^{th} embodiment of a switch gear according to the invention;
Fig. 19 is a side section view of the structure of the main portions of an embodiment of a switch gear;
Fig. 20 is a side section view of the structure of the main portions of an embodiment of a switch gear;
Fig. 21 is a side section view of the structure of the main portions of an embodiment of a switch gear;
Fig. 22 is a front section view taken along the line XXII-XXII shown in Fig. 21;
Fig. 23 is a side section view of the structure of the main portions of an embodiment of a switch gear;
Fig. 24 is a front section view taken along the line XXIV-XXIV shown in Fig. 23;
Fig. 25 is a side section view of the structure of the main portions of an embodiment of a switch gear;
Fig. 26 is a bottom view of the structure of the main portions of an embodiment of a switch gear;
Fig. 27 is a front section view taken along the line XXVII-XXVII shown in Fig. 26;
Fig. 28 is a side section view of the structure of the main portions of an embodiment of a switch gear;
Fig. 29 is a side section view of the structure of the main portions of an 8^{th} embodiment of a switch gear according to the invention;
Fig. 30 is a side section view of the structure of the main portions of a 9^{th} embodiment of a switch gear according to the invention;
Fig. 31 is a side section view of the structure of the main portions of an embodiment of a switch gear;
Fig. 32 is a side section view of the structure of the main portions of an embodiment of a switch gear;
Fig. 33 is a side section view of the structure of the main portions of an embodiment of a switch gear;
Fig. 34 is a front section view taken along the line XXXIV-XXXIV shown in Fig. 33;
Fig. 35 is a side section view of the structure of the main portions of an embodiment of a switch gear;
Fig. 36 is a front section view taken along the line XXXVI-XXXVI shown in Fig. 35;
Fig. 37 is a plan section view of the structure of the main portions of a conventional switch gear; and,
Fig. 38 is an electrical connection view of the conventional switch gear.
Fig. 39 is a skeleton view of a one-circuit power receiving system employed in a special-height metal closed type switch gear;
Fig. 40 is a perspective view of the appearance of the special-height metal closed type switch gear shown in Fig. 39;
Fig. 41 is a perspective view of a VCT panel shown in Fig. 40;
Fig. 42 is a perspective view of a meter transformer and lightning conductor panel, a bus converting panel and two feeder panels respectively shown in Fig. 40;
Fig. 43 is a skeleton view of a one-circuit power receiving system employed in a special-height metal closed type switch gear;
Fig. 44 is a perspective view of the appearance of the special-height metal closed type switch gear shown in Fig. 43;
Fig. 45 is a perspective view of an incoming panel, two feeder panels, a meter transformer and lightning conductor and a bus converting panel respectively employed in a special-height metal closed type switch gear;
Fig. 46 is an explanatory view of the divided and assembled states of a box body forming a VCT panel used in the special-height metal closed type switch gear shown in Fig. 45;
Fig. 47 is a circuit diagram of a skeleton of a one-circuit power receiving system;
Fig. 48 is a block skeleton view of an example in which the skeleton shown in Fig. 47 is structured using a conventional special-height metal closed type switch gear; and,
Fig. 49 is a perspective view of the appearance of the conventional special-height metal closed type switch gear shown in Fig. 48.

### DETAILED DESCRIPTION OF THE PREFERRED EMBODIMENTS

### (Embodiment 1)

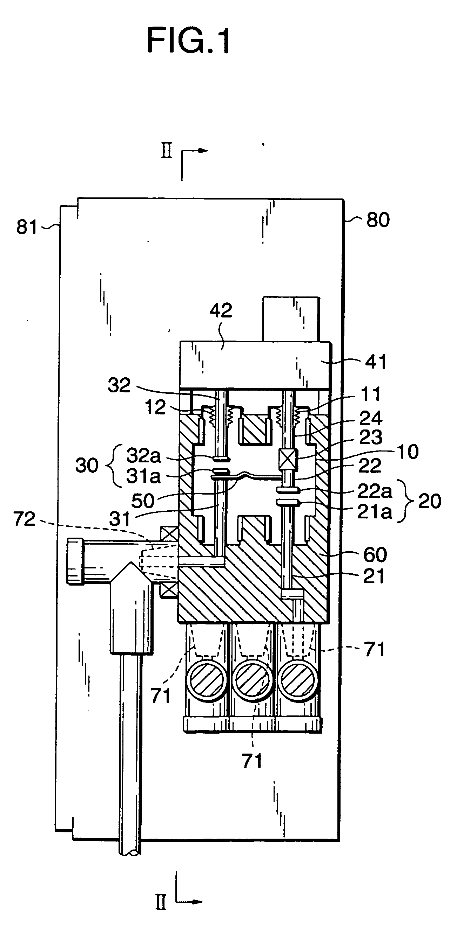

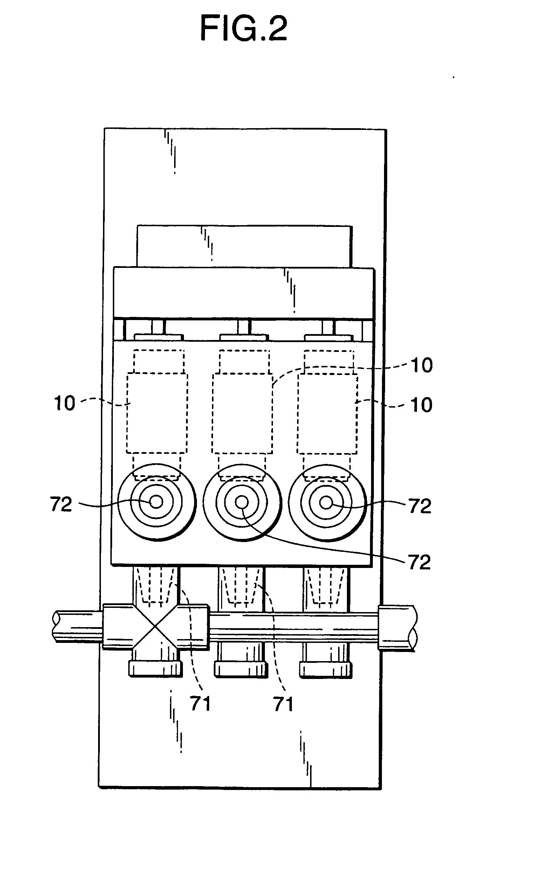

Now, description will be given below in detail of the preferred embodiments of a switch gear according to the invention with reference to the accompanying drawings. Fig. 1 is a side section view of the structure of the main portions of an embodiment 1 of a switch gear, and Fig. 2 is a front section view of the switch gear, taken along the line II-II shown in Fig. 1.

In Figs. 1 and 2, reference character 10 designates a vacuum container which is made of metal. In the interior portion of the vacuum container 10, there are stored a main circuit switching device 20 and a grounding switching device 30 in such a manner that the operation direction of the switching operations thereof is set in the vertical direction. The main circuit switching device 20 is composed of a fixed electrode 21a disposed on the upper end of a fixed electrode rod 21 which extends long in its longitudinal direction, that is, in the vertical direction in Fig. 1 and is formed in a crank-like shape, and a movable electrode 22a disposed on a movable electrode rod 22 which is situated upwardly of the fixed electrode rod 21 and extends long in its longitudinal direction, that is, in the vertical direction in Fig. 1. The peripheral surface of part of the fixed electrode rod 21 is fixed through an insulator to the vacuum container 10, whereby the fixed electrode rod 21 is electrically insulated from the vacuum container 10. On the other hand, the movable electrode rod 22 is, in the longitudinal direction thereof, connected through an insulation rod 23 to an operation rod 24, while the operation rod 24 is connected to an operation portion 41 which is used to actuate the main circuit switching device 20 so as to take a closed position, a breaking position and a disconnecting position. Also, the peripheral surface of part of the operation rod 24 is connected to the vacuum container 10 through a bellows 11 and an insulation, whereby the operation rod 24 is electrically insulated from the vacuum container 10; and, the operation rod 24 can be operated while it is keeping the interior portion of the vacuum container 10 in an airtight condition.

On the other hand, the grounding switching device 30 is composed of a fixed electrode 31a disposed on the upper end of a fixed electrode rod 31 which is situated on the front surface side of the main circuit switching device 20 and is formed in an L-like shape when it is viewed from the side surface thereof, and a movable electrode 32a disposed on a grounded movable electrode rod 32 which is situated upwardly of the fixed electrode rod 31 and extends long in the vertical direction. The peripheral surface of part of the fixed electrode rod 31 is fixed through an insulator to the vacuum container 10, whereby the fixed electrode rod 31 is electrically insulated from the vacuum container 10. On the other hand, the movable electrode rod 32 is connected to an operation portion 42 which is disposed integrally with the operation portion 41 so as to be able to switch the grounding switching device 30. Also, the peripheral surface of part of the movable electrode rod 32 is connected to the vacuum container 10 through a bellows 12 and an insulation, whereby the movable electrode rod 32 is electrically insulated from the vacuum container 10; and, the movable electrode rod 32 can be operated while it keeps the interior portion of the vacuum container 10 in an airtight condition.

The movable electrode rod 22 of the main circuit switching device 20 is electrically connected to the fixed electrode rod 31 of the grounding switching device 30 by a flexible conductor 50 which can be deformed. In case where the main circuit switching device 20 is held in a closed electrode state and the grounding switching device 30 is held in an open electrode state, a current is allowed to flow between the fixed electrode rod 21 of the main circuit switching device 20 and the fixed electrode rod 31 of the grounding switching device 30.

Also, three vacuum containers 10, 10 and 10 are arranged side by side in their transverse direction, that is, in the horizontal direction in Fig. 2 and the three vacuum containers 10, 10 and 10 are molded as a whole by an insulator. Three bus connecting terminals 71, 71 and 71 are respectively disposed on the lower surface of the above-formed molded portion 60 in such a manner that they face downward, while three load side transmission cable connecting terminals 72, 72 and 72 are respectively disposed on the front surface of the molded portion 60 in such a manner that they face forward. The bus connecting terminals 71, 71 and 71 are respectively disposed in their associated vacuum containers 10, 10 and 10 in a direction intersecting at right angles to the arranging direction of the vacuum containers 10, 10 and 10 in such a manner that they are shifted in position from one another; and, the load side transmission cable connecting terminals 72, 72 and 72 are respectively disposed in their associated vacuum containers 10, 10 and 10 in such a manner that they are coincident in position with one another. Each bus connecting terminal 71 is connected to the lower end of the fixed electrode rod 21 of the main circuit switching device 20, whereas each load side transmission cable connecting terminal 72 is connected to the front-surface side leading end of the fixed electrode rod 31 of the grounding switching device 30. Also, the load side transmission cable connecting terminal 72 has a shape which can be connected to a T-type connector and an L-type connector.

The molded vacuum containers 10, 10 and 10 are stored in a casing 80 including a door 81 in one surface thereof in such a manner the installation surfaces of the load side transmission cable connecting terminals 72, 72 and 72 are situated on the door 81 side.

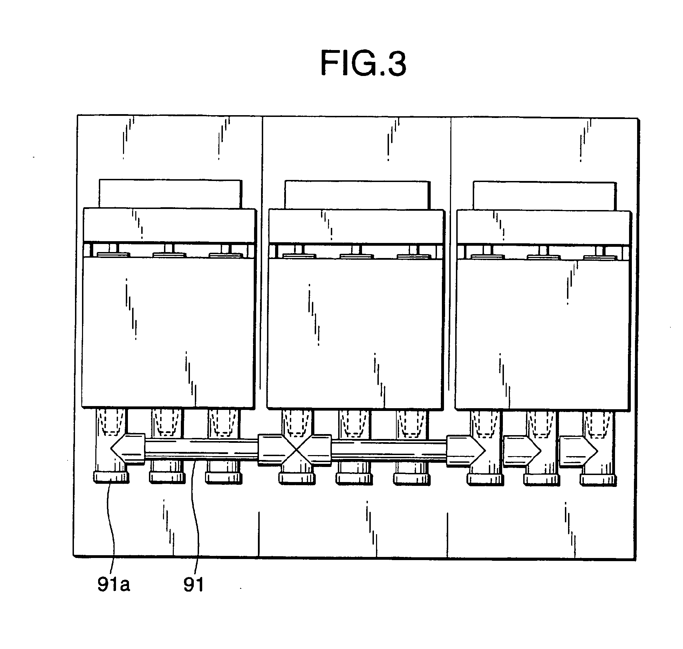

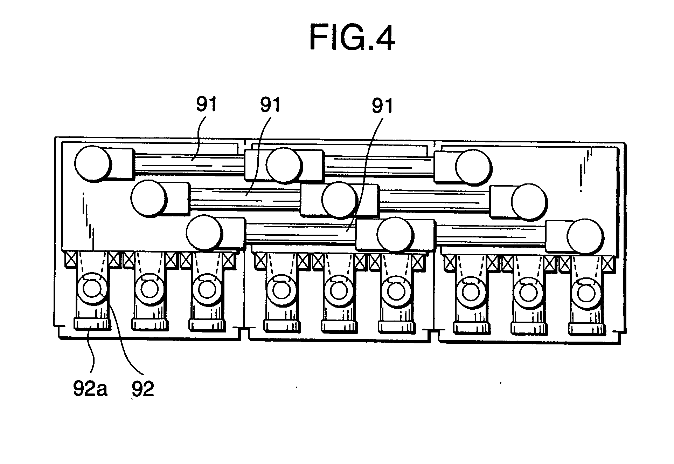

Three units, each of which is stored in the casing 80 in the above manner, are arranged side by side to thereby provide a 3-unit row board. Now, Fig. 3 is a back view of the 3-unit row board, and Fig. 4 is a lower surface view of the 3-unit row board. In Figs. 3 and 4, the bus connecting terminals 71, 71 and 71 are connected to buses 91 through T-type or cross-shaped connectors 91a respectively, while the buses 91 are respectively arranged in the arranging direction of the vacuum containers 10, 10 and 10. Each of the three vacuum containers 10, 10 and 10 corresponds to one phase of an alternating current power having three phases, while each bus 91 is passed through the side surfaces of the casings 80 and is connected to the bus connecting terminal 71 of the adjoining unit having the same phase. Therefore, the buses 91, 91 and 91 are arranged in parallel to one another in the back-and-forth direction of the 3-unit row board. Also, the load side transmission cable connecting terminal 72 of each unit is connected to a transmission cable 92 through a T-type connector 92a. The transmission cables 92 are passed through the lower surfaces of the casings 80 and arranged in the lower portion of the 3-unit row board side by side in their transverse direction, that is, in the horizontal direction in Fig. 4.

In the above-structured switch gear, since the vacuum containers 10 are molded directly by the insulator and, the bus connecting terminals 71 and load side transmission cable connecting terminals 72 are disposed directly on the molded portion, there is eliminated the need for provision of seal packing, thereby being able to prevent the occurrence of a poor airtight condition.

Also, because separate bushings are not necessary for the bus connecting terminals 71 and load side transmission cable connecting terminals 72, the switch gear can be reduced in size and the manufacturing cost thereof can be reduced.

Further, the present embodiment can be applied to a wiring pattern in which the buses 91 are arranged side by side in the horizontal direction and are also wired in the arranging direction of the vacuum containers 10, 10, 10, and the load side transmission cables 92 are arranged side by side in the horizontal direction and introduced from the bottom of the casing 80.

In addition, the present embodiment can be adapted to a case in which the load side transmission cable 92 has a T-type or L-type connector 92a.

### (Embodiment 2)

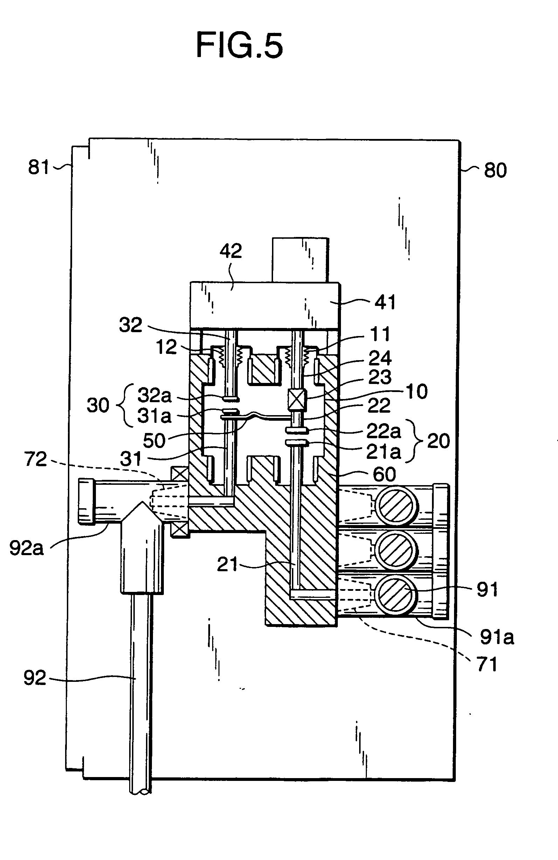

Now, Fig. 5 is a side section view of the structure of the main portions of an embodiment 2 of a switch gear.

In the present embodiment, the bus connecting terminal 71, which is disposed on the lower surface of the molded portion 60 in the embodiment 1 so as to face downward, is disposed on the back surface of the molded portion 60 so as to face backward. The bus connecting terminals 71, 71 and 71 of one unit are respectively disposed in the vertical direction in their associated vacuum containers 10, 10 and 10 in such a manner they are shifted in position from one another; and, the buses 91 are arranged side by side in the vertical direction and are wired in the arranging direction of the vacuum containers 10, 10 and 10. Also in the present embodiment, the equivalent parts or similar parts thereof to those in the embodiment 1 are given the same designations and thus the description thereof is omitted here.

Therefore, the present embodiment can be adapted to a wiring pattern in which the buses 91 are arranged side by side in the vertical direction and are wired in the arranging direction of the vacuum containers 10, 10 and 10, and the load side transmission cables 92 are introduced from the bottom side of the casing 80.

### (Embodiment 3)

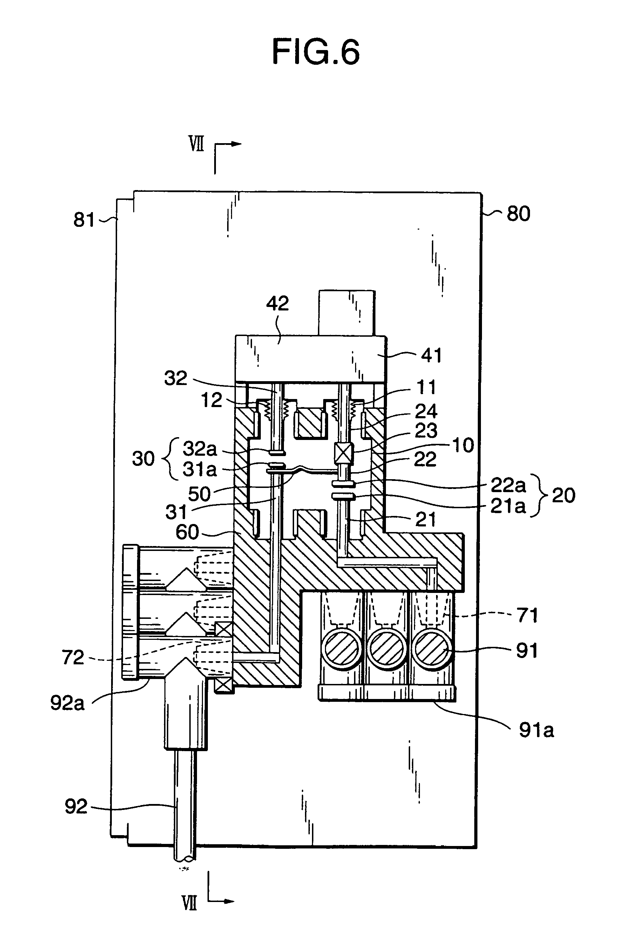

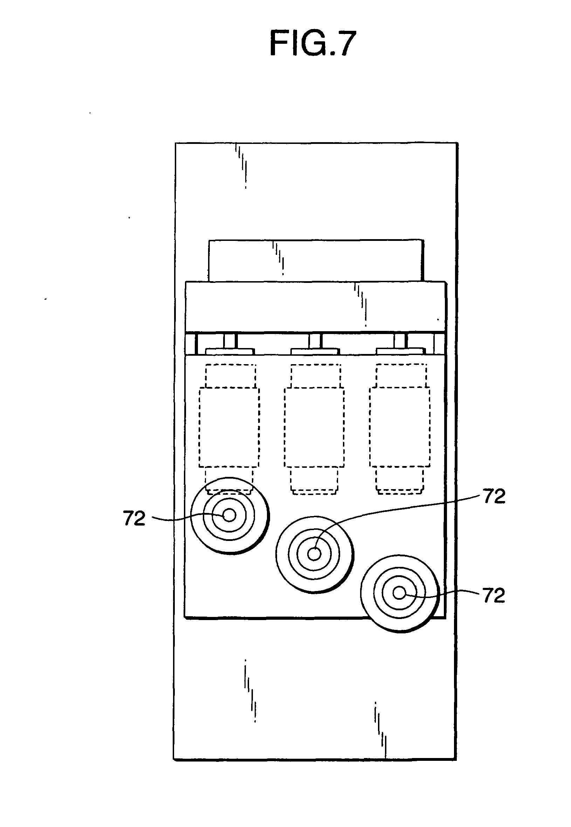

Now, Fig. 6 is a side section view of the structure of the main portions of an embodiment 3 of a switch gear and, Fig. 7 is a front section view taken along the line VII-VII shown in Fig. 6.

The load side transmission cable connecting terminals 72, 72 and 72 of one unit are respectively disposed in the vertical direction in their associated vacuum containers 10, 10 and 10 in such a manner that they are shifted in position from one another Also in the present embodiment, the equivalent parts or similar parts thereof to those in the embodiment 1 are given the same designations and thus the description thereof is omitted here.

Therefore, the present embodiment can be adapted even to a wiring pattern in which the buses 91 are arranged side by side in the horizontal direction and are wired in the arranging direction of the vacuum containers 10, 10 and 10, and the load side transmission cables 92 are arranged side by side in the vertical direction and are wired in the arranging direction of the vacuum containers 10, 10 and 10.

### (Embodiment 4)

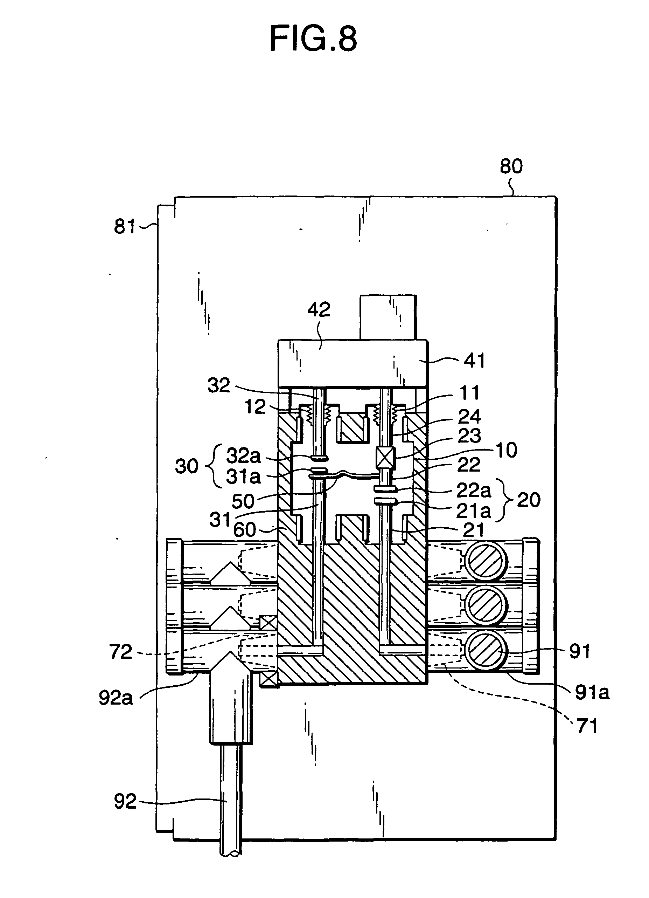

Now, Fig. 8 is a side section view of the structure of the main portions of an embodiment 4 of a switch gear,

The load side transmission cable connecting terminals 72, 72 and 72 of one unit are respectively disposed in the vertical direction in their associated vacuum containers 10, 10 and 10 in such a manner that they are shifted in position from one another. Also in the present embodiment, the equivalent parts or similar parts thereof to those in the embodiment 2 are given the same designations and thus the description thereof is omitted here.

Therefore, the present embodiment can also be adapted even to a wiring pattern in which the buses 91 are arranged side by side in the horizontal direction and are wired in the arranging direction of the vacuum containers 10, 10, 10, and the load side transmission cables 92 are arranged side by side in the vertical direction and are wired in the arranging direction of the vacuum containers 10, 10 and 10.

### (Embodiment 5)

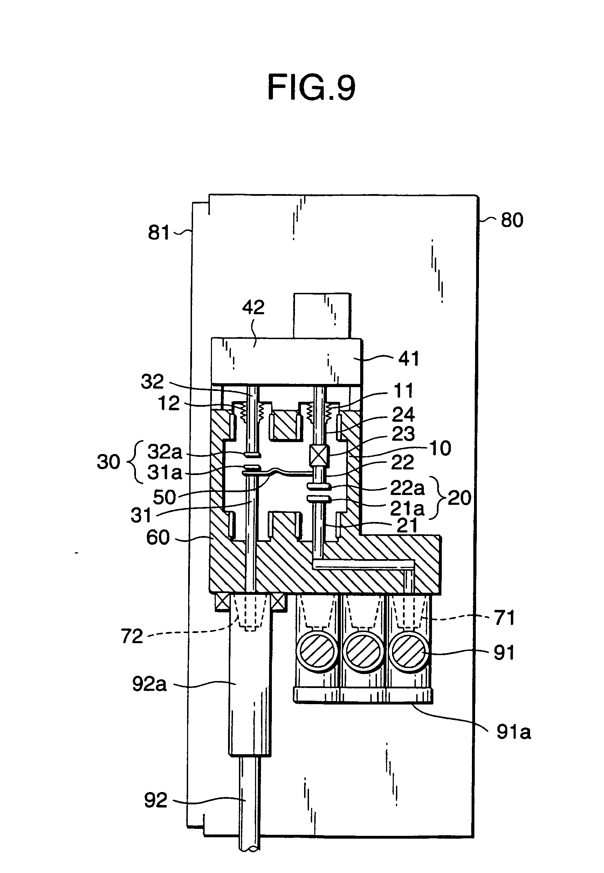

Now, Fig. 9 is a side section view of the structure of the main portions of an embodiment 5 of a switch gear

The load side transmission cable connecting terminals 72, 72 and 72 of one unit are respectively disposed on the lower surface of the molded portion 60 so as to face downward and are respectively formed in a shape which can be connected to an I-type connector. Also in the present embodiment, the equivalent parts or similar parts thereof to those in the embodiment 1 are given the same designations and thus the description thereof is omitted here.

Therefore, the structure of the present embodiment can also be adapted to a structure in which the load side transmission cable connector 92a has an I-type shape.

### (Embodiment 6)

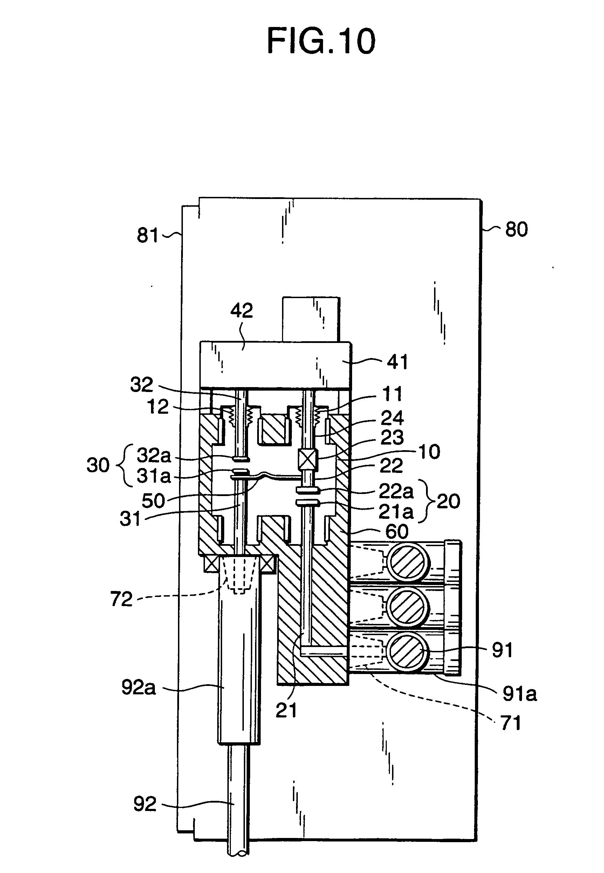

Now, Fig. 10 is a side section view of the structure of the main portions of an embodiment 6 of a switch gear.

The load side transmission cable connecting terminals 72 72 and 72 of one unit are respectively disposed on the lower surface of the molded portion 60 so as to face downward and are respectively formed in a shape which can be connected to an I-type connector. Also in the present embodiment, the equivalent parts or similar parts thereof to those in the embodiment 2 are given the same designations and thus the description thereof is omitted here.

Therefore, the present embodiment can be adapted to a structure in which the load side transmission cable connector 92a has an I-type shape.

### (Embodiment 7)

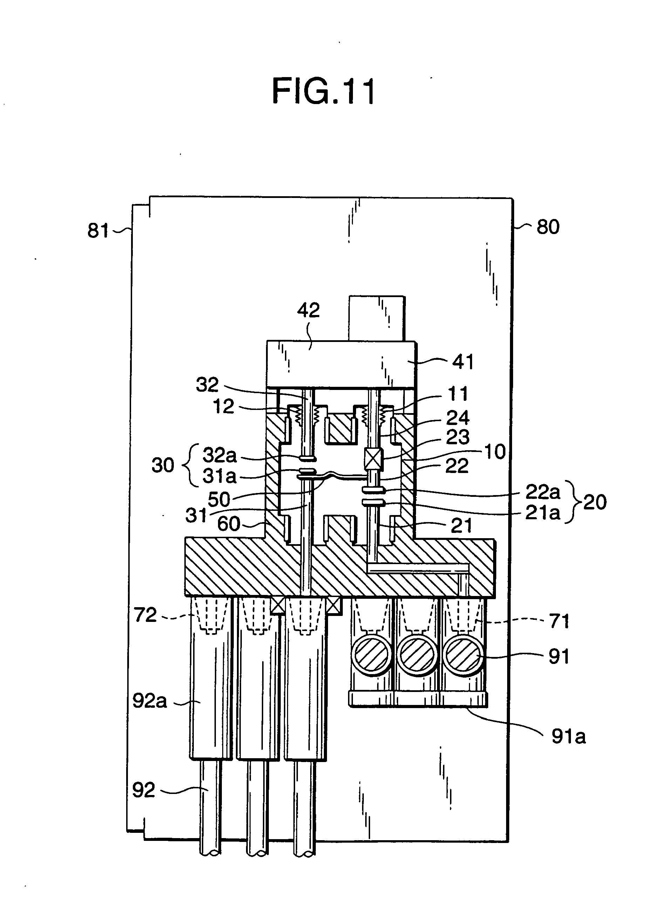

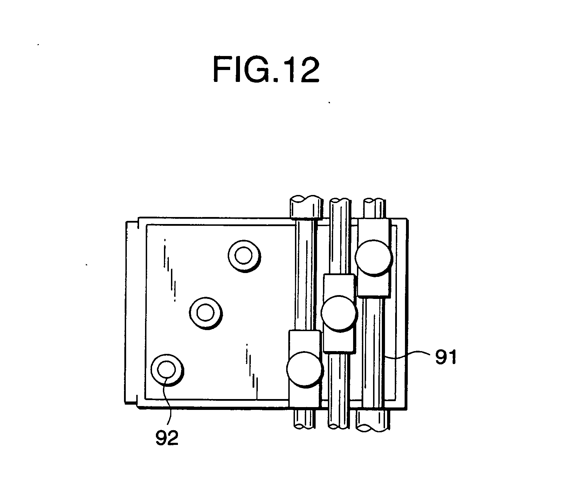

Now, Fig. 11 is a side section view of the structure of the main portions of an embodiment 7 of a switch gear, and Fig. 12 is a bottom view thereof.

The load side transmission cable connecting terminals 72, 72 and 72 of one unit are respectively formed in a shape which can be connected to T-type, L-type and I-type connectors. Also in the present embodiment, the equivalent parts or similar parts thereof to those in the embodiment 5 are given the same designations and thus the description thereof is omitted here.

Therefore, in case where the connector 92a of the leading end of the transmission cable 92 is formed in a T-type shape or in an L-type shape, the present embodiment can be adapted to a wiring pattern in which the transmission cables 92, 92 and 92 are arranged side by side in the vertical direction and are wired in the arranging direction of the vacuum containers 10, 10 and 10.

### (Embodiment 8)

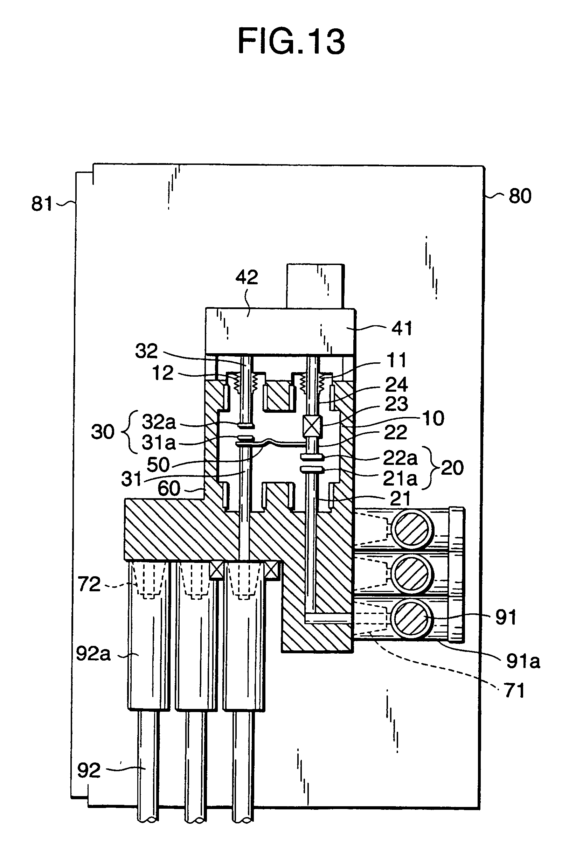

Now, Fig. 13 is a side section view of the structure of the main portions of an embodiment 8 of a switch gear.

The load side transmission cable connecting terminals 72, 72 and 72 of one unit are respectively formed in a shape which can be connected to T-type, L-type and I-type connectors. Also, in the present embodiment, the equivalent parts or similar parts thereof to those in the embodiment 6 are given the same designations and thus the description thereof is omitted here.

Therefore, in case where the connector 92a of the leading end of the transmission cable 92 is formed in a T-type shape or in an L-type shape, the present embodiment can be adapted to a wiring pattern in which the transmission cables 92, 92 and 92 are arranged side by side in the vertical direction and are wired in the arranging direction of the vacuum containers 10, 10 and 10.

### (Embodiment 9)

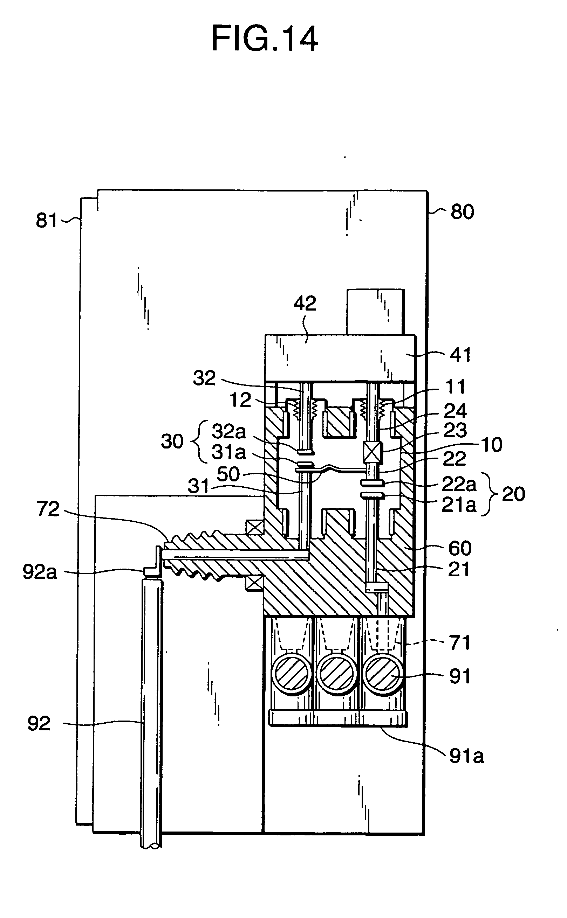

Now, Fig. 14 is a side section view of the structure of the main portions of an embodiment 9 of a switch gear.

The load side transmission cable connecting terminal 72 is formed in a shape which can be connected to an aerial connecting connector to be connected at right angles to the transmission cable 92. Also, in the present embodiment, the equivalent parts or similar parts thereof to those in the embodiment 1 are given the same designations and thus the description thereof is omitted here.

Therefore, the present embodiment can be adapted to a case in which the connector 92 of the load side transmission cable is formed in a shape suitable for aerial connection.

### (Embodiment 10)

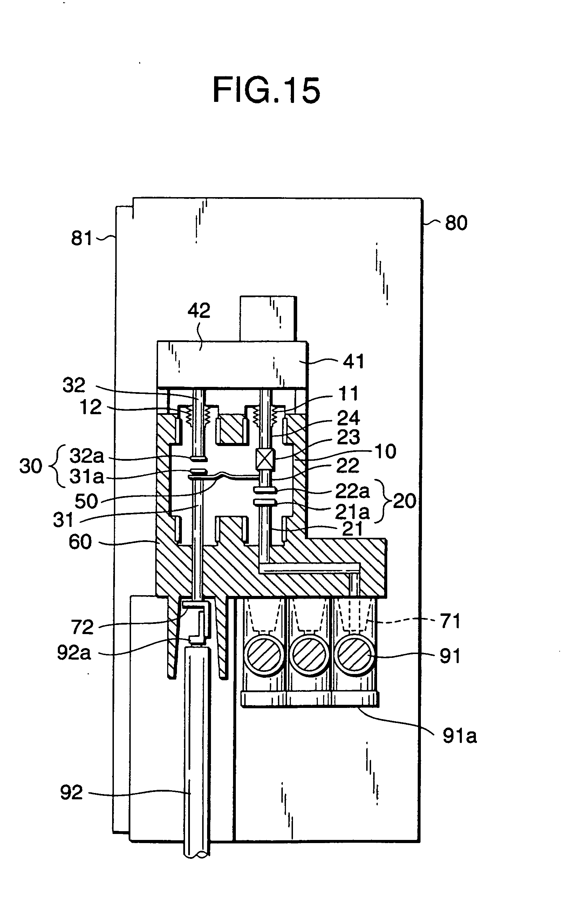

Now, Fig. 15 is a side section view of the structure of the main portions of an embodiment 10 of a switch gear

The load side transmission cable connecting terminal 72 is formed in a shape which can be connected to an aerial connecting connector to be connected linearly to the transmission cable 92. Also, in the present embodiment, the equivalent parts or similar parts thereof to those in the embodiment 5 are given the same designations and thus the description thereof is omitted here.

Therefore, the present embodiment can be adapted to a case in which the connector 92a of the load side transmission cable is formed in a shape capable of aerial connection.

### (Embodiment 11)

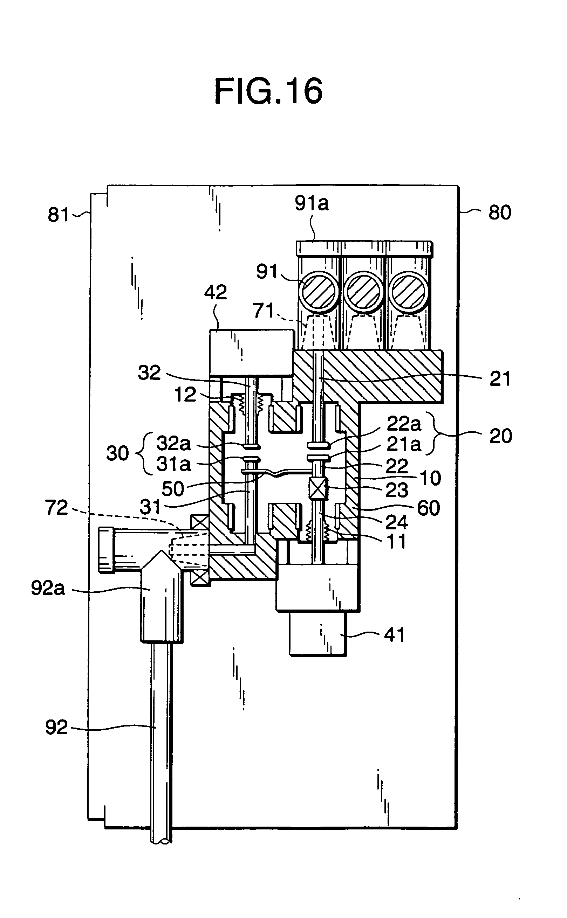

Now, Fig. 16 is a side section view of the structure of the main portions of an embodiment 11 of a switch gear

In the present embodiment, the fixed electrode 21a of the main circuit switching device 20 is disposed on the upper side, whereas the movable electrode 22a of the main circuit switching device 20 is disposed on the lower side; and, an operation portion 41 for driving the main circuit switching device 20 is attached to the lower surface of the vacuum container 10. Also, upwardly of the fixed electrode 21a, a bus connecting terminal 71, which is connected to the upper end portion of the fixed electrode rod 21, is disposed on the upper surface of the molded portion 60 in such a manner that it faces upwardly. The bus line connecting terminals 71, 71 and 71 of the vacuum containers 10, 10 and 10 of one unit are disposed shifted in position from one another in the back-and-forth direction of the casing 80.

Buses 91, 91 and 91, which are respectively to be connected to the main circuit switching devices 20, 20 and 20 of the vacuum containers 10, 10 and 10 of one unit, are arranged side by side in the back-and-forth direction of the casing 80 on the deeper side of the upper portion of the casing 80 and are also wired in the horizontal direction. Also, in the present embodiment, the equivalent parts or similar parts thereof to those in the embodiment 1 are given the same designations and thus the description thereof is omitted here.

Therefore, the present embodiment can be applied to a wiring pattern in which, on the deep side of the upper portion of the interior of the casing 80, the buses 91, 91 and 91 are arranged side by side in the back-and-forth direction of the casing 80 and are also wired in the horizontal direction, while the load side transmission cables 92 are arranged side by side in the transverse direction and are introduced from the bottom of the front portion of the interior of the casing 80.

### (Embodiment 12)

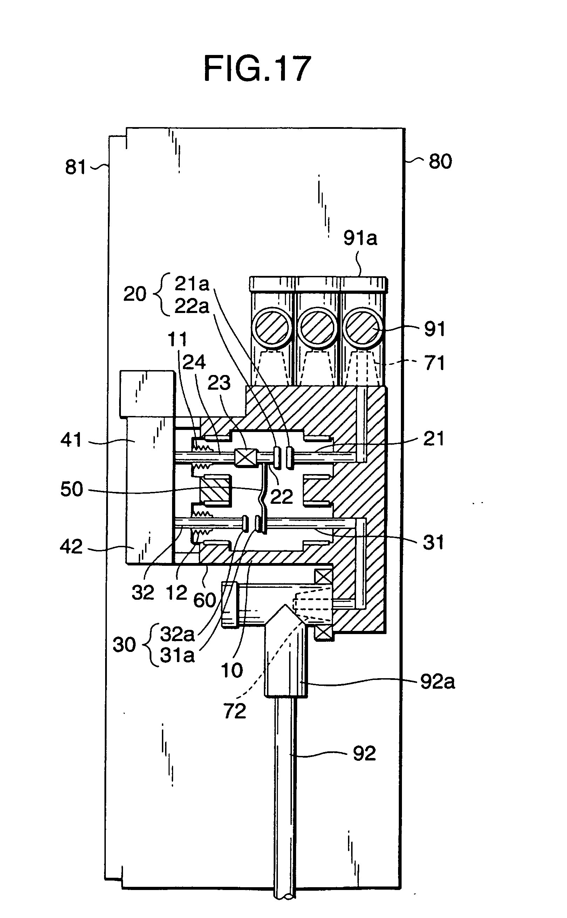

Now, Fig. 17 is a side section view of the structure of the main portions of an embodiment 12 of a switch gear.

In the present embodiment, the main circuit switching device 20 and grounding switching device 30 are arranged side by side in the vertical direction, the fixed electrodes 21a and 31a of the main circuit switching device 20 and grounding switching device 30 are respectively disposed on the deeper side, and the movable electrodes 22a and 32a of the main circuit switching device 20 and grounding switching device 30 are respectively disposed on the front side. The main circuit switching device 20 is disposed upwardly of the grounding switching device 30, an operation portion 41 for driving the main circuit switching device 20 is attached to the front surface of the vacuum container 10, and an operation portion 42 for driving the grounding switching device 30 is disposed downwardly of the operation portion 41. Also, the bus connecting terminal 71 is disposed on the upper surface of the molded portion 60 so as to face upwardly, and the load side transmission cable connecting terminal 72 is disposed on the front surface of the lower portion of the molded portion 60 so as to face forwardly. The bus line connecting terminals 71, 71 and 71 of the vacuum containers 10, 10 and 10 of one unit are respectively disposed shifted in position from one another in the back-and-forth direction. And, the load side transmission cable connecting terminals 72, 72 and 72 of one unit are respectively disposed in their associated vacuum containers 10, 10 and 10 in such a manner that they are coincident in position with one another.

Buses 91, 91 and 91, which are respectively to be connected to the main circuit switching devices 20, 20 and 20 of the vacuum containers 10, 10 and 10 of one unit, are arranged side by side in the back-and-forth direction on the deeper side of the upper portion of the casing 80 and are also wired in the horizontal direction; and, load side transmission cables 92, 92 and 92, which are respectively to be connected to the grounding switching devices 30, 30 and 30 of the vacuum containers 10, 10 and 10, are respectively disposed so as to extend through the lower surface of the deep portion of the casing 80, are arranged side by side in the horizontal direction, and wired in the lower portion of the casing 80. Also, in the present embodiment, the equivalent parts or similar parts thereof to those in the embodiment 1 are given the same designations and thus the description thereof is omitted here.

Therefore, the present embodiment can be applied to a wiring pattern in which, on the deeper side of the upper portion of the casing 80, the buses 91, 91 and 91 are arranged side by side in the back-and-forth direction and are also wired in the arranging direction of the vacuum containers 10, 10 and 10, while the load side transmission cables 92 are arranged side by side in the transverse direction and are introduced from the bottom of the deep portion of the interior of the casing 80.

Also, since the operation portions 41 and 42 are disposed on the front surface of the casing 80, the management of the operation portions 41 and 42 can be simplified.

### (Embodiment 13)

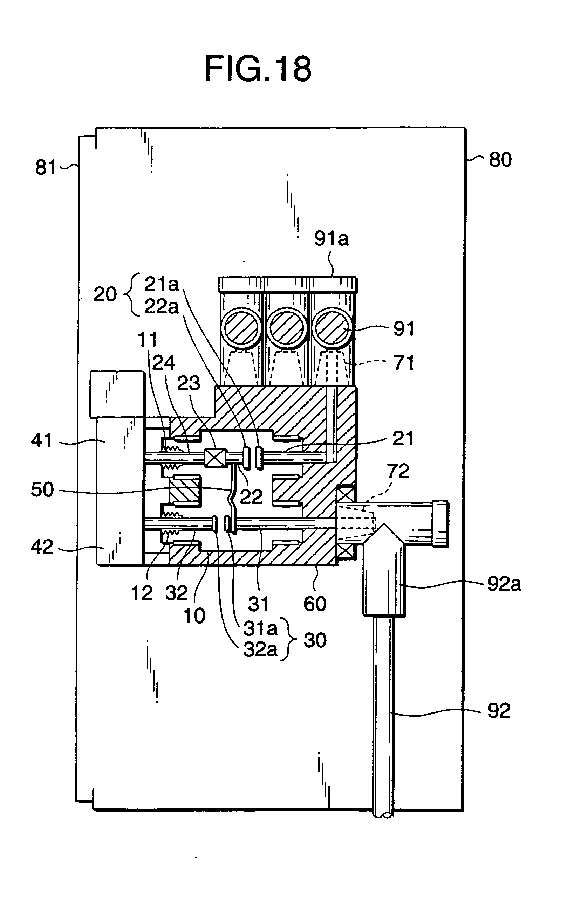

Now, Fig. 18 is a side section view of the structure of the main portions of an embodiment 13 of a switch gear

In the lower portion of the back surface of the molded portion 60, there is disposed a load side transmission cable connecting terminal 72 to be connected to the fixed electrode rod 32 of the grounding switching device 30 in such a manner that the terminal 72 faces backwardly. Also, buses 91, 91 and 91, which are respectively to be connected to the main circuit switching devices 20, 20 and 20 of the vacuum containers 10, 10 and 10 of one unit, are arranged side by side in the back-and-forth direction on the upper side of the central portion of the casing 80 and are also wired in the transverse direction. Also, in the present embodiment, the equivalent parts or similar parts thereof to those in the embodiment 12 are given the same designations and thus the description thereof is omitted here.

Therefore, the present embodiment can be applied to a wiring pattern in which, on the upper side of the central portion of the casing 80, the buses 91, 91 and 91 are arranged side by side in the back-and-forth direction and are also wired in the arranging direction of the vacuum containers 10, 10 and 10, while the load side transmission cables 92 are arranged side by side in the transverse direction and are introduced from the bottom of the deep portion of the interior of the casing 80.

### (Embodiment 14)

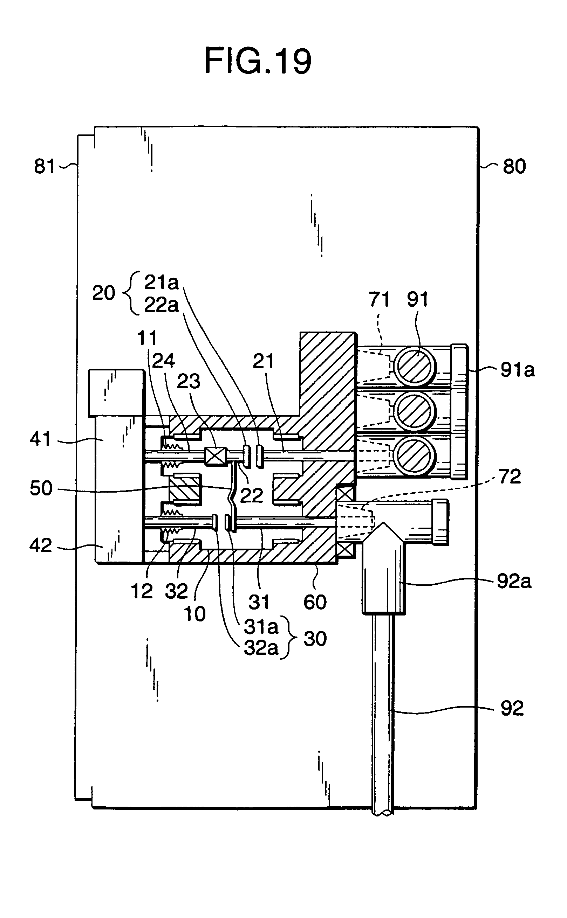

Now, Fig. 19 is a side section view of the structure of the main portions of an embodiment 14 of a switch gear.

In the upper portion of the back surface of the molded portion 60, there is disposed a bus connecting terminal 71 to be connected to the fixed electrode rod 22 of the main circuit switching device 20 in such a manner that the terminal 71 faces backwardly. And, the bus connecting terminals 71, 71 and 71 of the vacuum containers 10, 10 and 10 of one unit are respectively disposed in such a manner that they are shifted in position from one another in the vertical direction. Also, buses 91, 91 and 91, which are respectively to be connected to the main circuit switching devices 20, 20 and 20 of the vacuum containers 10, 10 and 10 of one unit, are arranged side by side in the vertical direction on the deeper side of the upper portion of the casing 80 and are also wired in the transverse direction. Further, in the present embodiment, the equivalent parts or similar parts thereof to those in the embodiment 13 are given the same designations and thus the description thereof is omitted here.

Therefore, the present embodiment can be applied to a wiring pattern in which, on the deeper side of the upper portion of the casing 80, the buses 91, 91 and 91 are arranged side by side in the vertical direction and are also wired in the transverse direction, while the load side transmission cables 92 are arranged side by side in the transverse direction and are introduced from the bottom of the deep portion of the interior of the casing 80.

### (Embodiment 15)

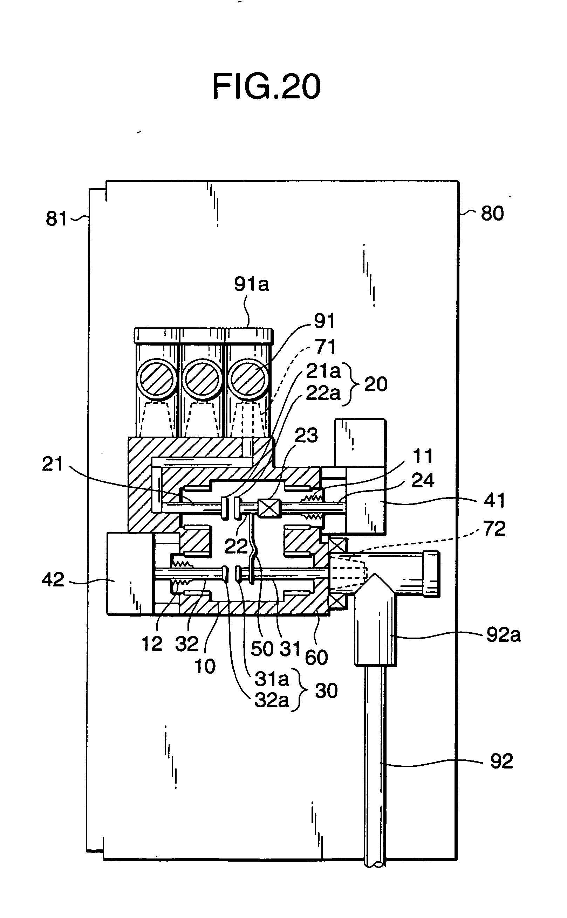

Now, Fig. 20 is a side section view of the structure of the main portions of an embodiment 15 of a switch gear.

In the present embodiment, the fixed electrode 21a of the main circuit switching device 20 is disposed on the front side, whereas the movable electrode 22a of the main circuit switching device 20 is disposed on the deeper side; and, an operation portion 41 for driving the main circuit switching device 20 is attached to the back surface of the vacuum container 10. Also, the bus connecting terminal 71, which is connected to the fixed electrode rod 22 of the main circuit switching device 20, is disposed in the front portion of the upper surface of the molded portion 60 so as to face upwardly. The bus line connecting terminals 71, 71 and 71 of the vacuum containers 10, 10 and 10 of one unit are respectively disposed in such a manner that they are shifted in position from one another in the back-and-forth direction. And, buses 91, 91 and 91, which are respectively to be connected to the main circuit switching devices 20, 20 and 20 of the vacuum containers 10, 10 and 10 of one unit, are arranged side by side in the back-and-forth direction on the front side of the upper portion of the casing 80 and are also wired in the transverse direction. Also, in the present embodiment, the equivalent parts or similar parts thereof to those in the embodiment 14 are given the same designations and thus the description thereof is omitted here.

Therefore, the present embodiment can be applied to a wiring pattern in which, on the front side of the upper portion of the casing 80, the buses 91, 91 and 91 are arranged side by side in the back-and-forth direction and are also wired in the transverse direction, while the load side transmission cables 92 are arranged side by side in the horizontal direction and are introduced from the bottom of the deep portion of the interior of the casing 80.

### (Embodiment 16)

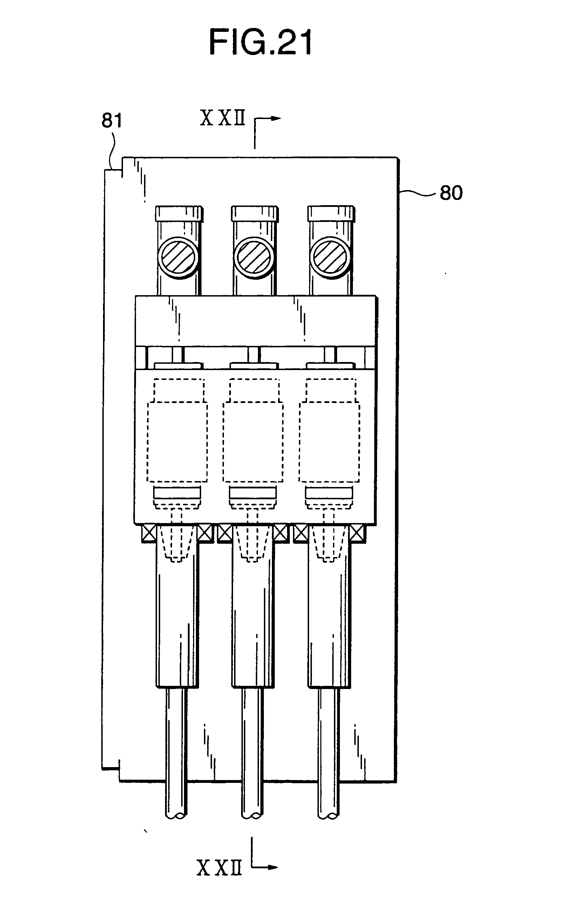

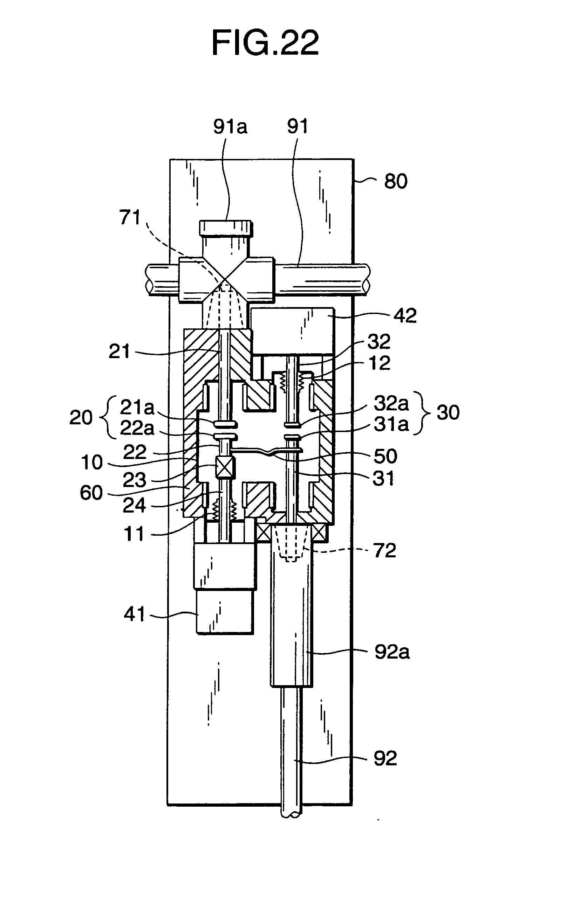

Now, Fig. 21 is a side section view of the structure of the main portions of an embodiment 16 of a switch gear, and Fig. 22 is a front section view taken along the line XXII-XXII shown in Fig. 21.

In the present embodiment, the main circuit switching device 20 and grounding switching device 30 are arranged side by side in the back-and-forth direction, the fixed electrodes 21a and 31a of the main circuit switching device 20 and grounding switching device 30 are disposed respectively on the upper and lower sides, and the movable electrodes 22a and 32a of the main circuit switching device 20 and grounding switching device 30 are disposed respectively on the lower and upper sides. The main circuit switching device 20 is disposed forwardly of the grounding switching device 30, an operation portion 41 for driving the main circuit switching device 20 is attached to the lower surface of the vacuum container 10, and an operation portion 42 for driving the grounding switching device 30 is attached to the upper surface of the vacuum container 10. Also, the bus connecting terminal 71 is disposed on the upper surface of the molded portion 60 just above the main circuit switching device 20 so as to face upwardly, and the load side transmission cable connecting terminal 72, which is to be connected to an I-type connector, is disposed in the deep portion of the lower surface of the molded portion 60 just below the grounding switching device 30 so as to face downwardly. The bus line connecting terminals 71, 71 and 71 of the vacuum containers 10, 10 and 10 of one unit are respectively disposed in such a manner that they are coincident in position with one another in their associated vacuum containers 10, 10 and 10; and, the load side transmission cable connecting terminals 72, 72 and 72 of one unit are respectively disposed in such a manner that they are coincident in position with one another in their associated vacuum containers 10, 10 and 10.

The thus structured vacuum containers 10, 10 and 10 are disposed side by side within the casing 80 in the back-and-forth direction thereof.

Buses 91, 91 and 91, which are respectively to be connected to the main circuit switching devices 20, 20 and 20 of the vacuum containers 10, 10 and 10 of one unit, are disposed in the upper portion of the casing 80 in such a manner that they are arranged side by side in the back-and-forth direction of the casing 80, and are also wired in the transverse direction; and, load side transmission cables 92, 92 and 92, which are respectively to be connected to the grounding switching devices 30, 30 and 30 of the vacuum containers 10, 10 and 10, are respectively disposed so as to extend through the lower surface of the deep portion of the casing 80, are arranged side by side in the back-and-forth direction, and are wired in the lower portion of the casing 80. Also, in the present embodiment, the equivalent parts or similar parts thereof to those in the embodiment 1 are given the same designations and thus the description thereof is omitted here.

Therefore, the present embodiment can be applied to a wiring pattern in which, in the upper portion of the interior of the casing 80, the buses 91 are disposed so as to extend side by side in the back-and-forth direction of the casing 80 and are also wired in the transverse direction thereof, while the load side transmission cables 92 are arranged side by side in the back-and-forth direction of the casing 80 and are introduced from the bottom of the interior of the casing 80.

### (Embodiment 17)

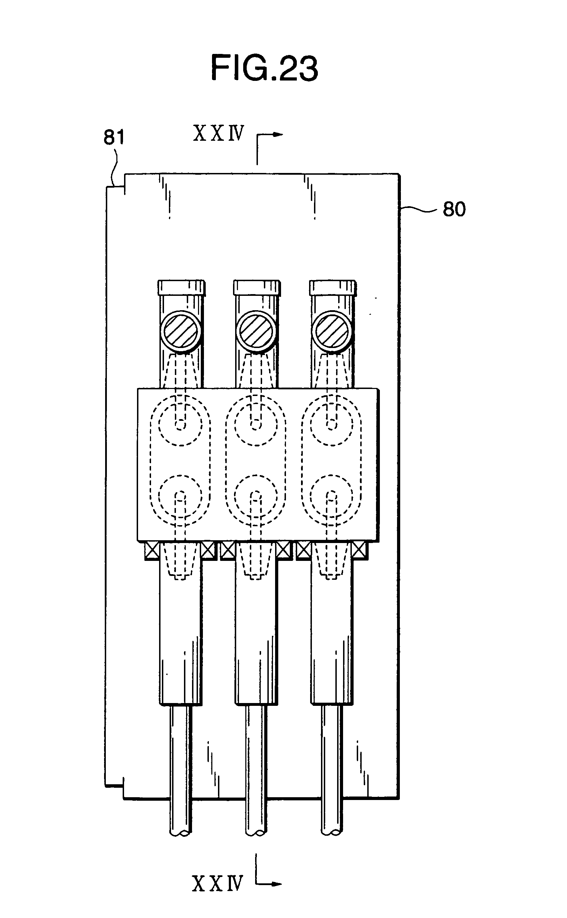

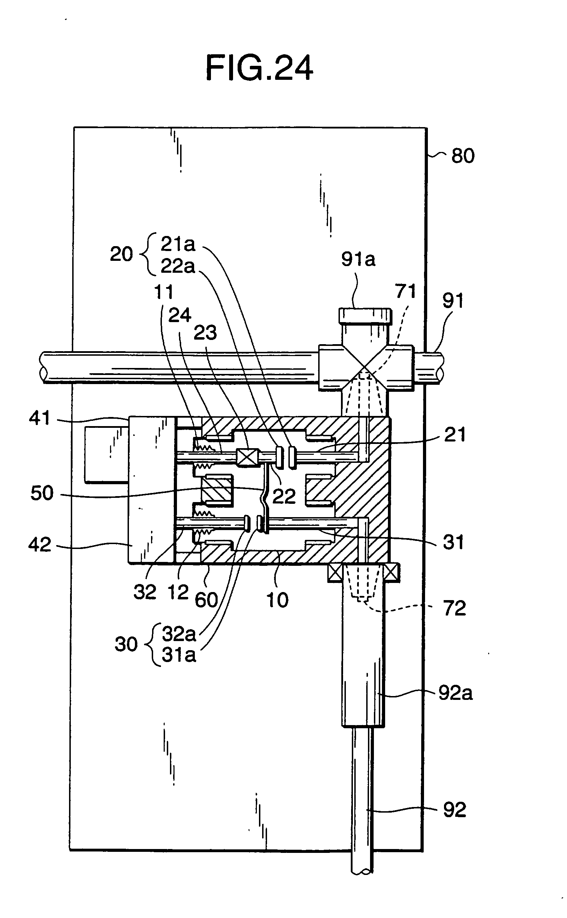

Now, Fig. 23 is a side section view of the structure of the main portions of an embodiment 17 of a switch gear, and Fig. 24 is a front section view taken along the line XXIV-XXIV shown in Fig. 23.

In the present embodiment, the main circuit switching device 20 and grounding switching device 30, with their longitudinal direction as the transverse direction of the casing 80, are arranged side by side in the vertical direction, the fixed electrodes 21a and 31a of the main circuit switching device 20 and grounding switching device 30 are disposed respectively on the same side, and the movable electrodes 22a and 32a of the main circuit switching device 20 and grounding switching device 30 are disposed respectively on the opposite side to the fixed electrodes 21a and 31a. The main circuit switching device 20 is disposed upwardly of the grounding switching device 30, an operation portion 41 for driving the main circuit switching device 20 is attached to the side surface of the vacuum container 10 on the movable electrodes 22a and 32a side thereof, and an operation portion 42 for driving the grounding switching device 30 is installed integrally with operation portion 41. Also, the bus connecting terminal 71 is disposed on the upper surface of the molded portion 60 on the movable electrodes 22a and 32a side thereof so as to face upwardly, and the load side transmission cable connecting terminal 72, which is to be connected to an I-type connector, is disposed in the lower surface of the molded portion 60 just below the bus connecting terminal 71 so as to face downwardly.

Buses 91, 91 and 91, which are respectively to be connected to the main circuit switching devices 20, 20 and 20 of the vacuum containers 10, 10 and 10 of one unit, are disposed in the upper portion of the casing 80 so as to extend side by side in the back-and-forth direction of the casing 80 and are also wired in the transverse direction thereof, that is, in the horizontal direction; and, load side transmission cables 92, 92 and 92, which are respectively to be connected to the grounding switching devices 30, 30 and 30 of the vacuum containers 10, 10 and 10, are respectively disposed so as to extend through the lower surface of the deep portion of the casing 80, are arranged side by side in the back-and-forth direction of the casing 80, and are wired in the lower portion of the casing 80. Also, in the present embodiment, the equivalent parts or similar parts thereof to those in the embodiment 16 are given the same designations and thus the description thereof is omitted here.

Therefore, since the main circuit switching device 20 and grounding switching device 30 are respectively disposed with their longitudinal direction thereof as the transverse direction of the casing 80, the height of the switch gear can be reduced; that is, the present embodiment can be installed in a space the height of which is limited.

### (Embodiment 18)

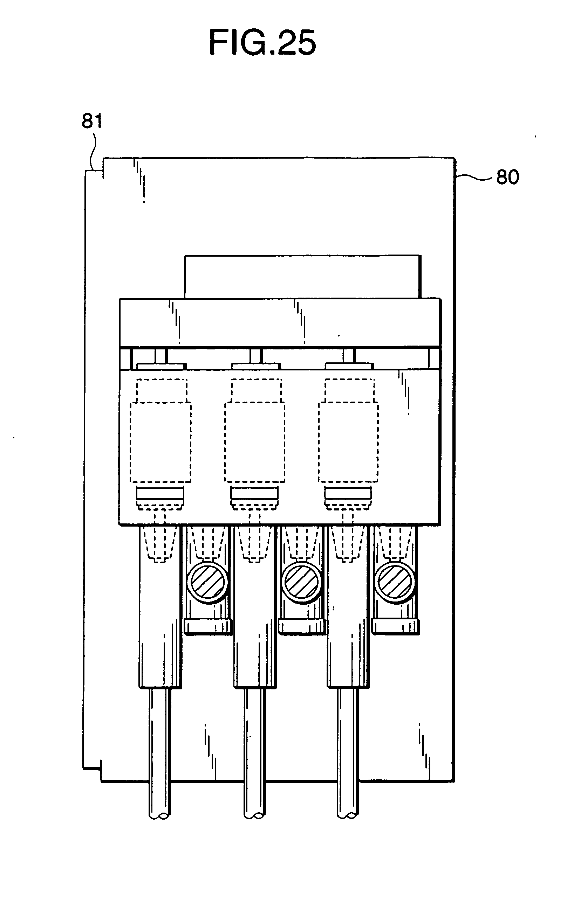

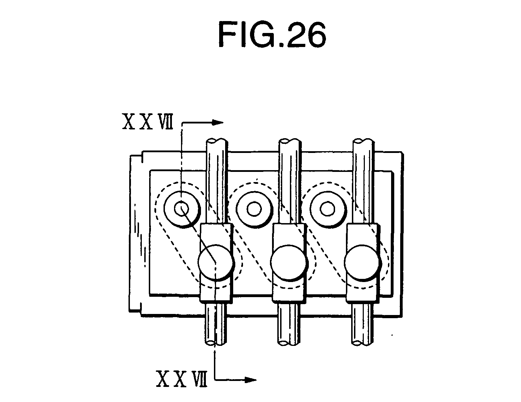

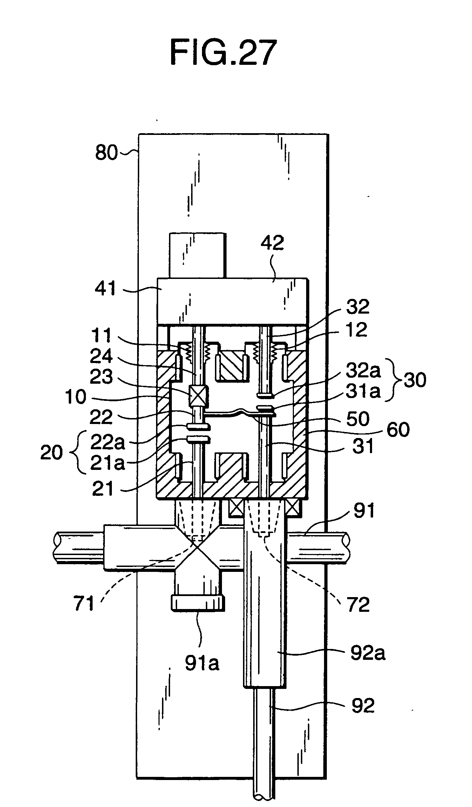

Now, Fig. 25 is a side section view of the structure of the main portions of an embodiment 18 of a switch gear, Fig. 26 is a lower surface view thereof, and Fig. 27 is a front section view taken along the line XXVII-XXVII shown in Fig. 26.

In the present embodiment, the main circuit switching device 20 and grounding switching device 30 with their longitudinal direction as the vertical direction of the casing 80, are arranged side by side in the vertical direction, the fixed electrodes 21a and 31a of the main circuit switching device 20 and grounding switching device 30 are disposed respectively on the lower side, and the movable electrodes 22a and 32a of the main circuit switching device 20 and grounding switching device 30 are disposed respectively on the upper side. The arranging direction of the main circuit switching device 20 and grounding switching device 30 is set in a direction inclined at a proper angle to the transverse direction thereof. Operation portions 41 and 42, which are respectively used to drive the main circuit switching device 20 and grounding switching device 30 are integrally attached to the upper surface of the vacuum container 10. Also, the bus connecting terminal 71 is disposed on the lower surface of the molded portion 60 just below the main circuit switching device 20 so as to face downwardly, and the load side transmission cable connecting terminal 72, which is to be connected to an I-type connector, is disposed in the lower surface of the molded portion 60 just below the grounding switching device 30 so as to face downwardly.

Buses 91, 91 and 91, which are respectively to be connected to the main circuit switching devices 20, 20 and 20 of the vacuum containers 10, 10 and 10 of one unit, are disposed in the lower portion of the casing 80 so as to extend side by side in the back-and-forth direction of the casing 80 and are also wired in the transverse direction of the casing 80. Also, in the present embodiment, the equivalent parts or similar parts thereof to those in the embodiment 16 are given the same designations and thus the description thereof is omitted here.

Therefore, the present embodiment can be adapted to a wiring pattern in which, in the lower portion of the interior of the casing 80, the buses 91 are respectively disposed so as to extend side by side in the back-and-forth direction of the casing 80, and are wired in the transverse direction of the casing 80, while the load side transmission cables 92 are arranged side by side in the back-and-forth direction of the casing 80 and are introduced from the bottom of the casing 80.

### (Embodiment 19)

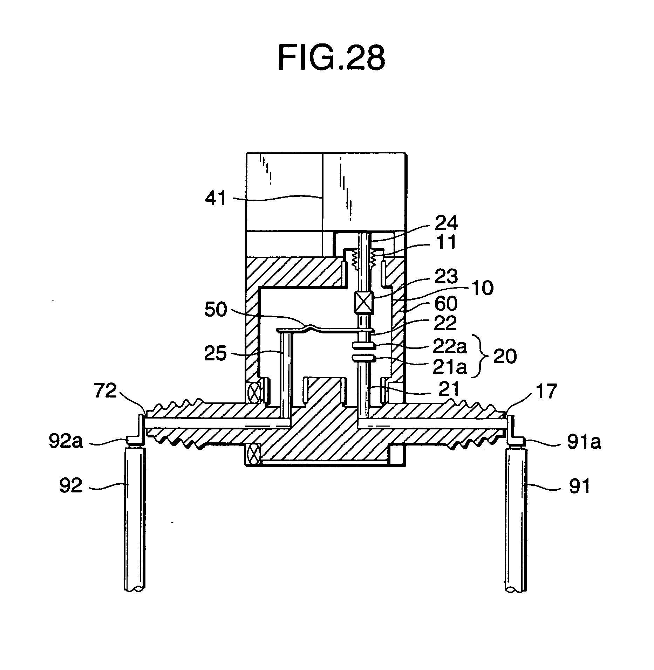

Now, Fig. 28 is a side section view of the structure of the main portions of an embodiment 19 of a switch gear

In the present embodiment, in the interior portion of the vacuum container 10, there is disposed a main circuit switching device 20 with the longitudinal direction thereof as the vertical direction of the casing 80. The fixed electrode 21a of the main circuit switching device 20 is situated on the lower side, while the movable electrode 22a of the main circuit switching device 20 is situated on the upper side; and, an operation portion 41 for driving the main circuit switching device 20 is attached to the upper surface of the vacuum container 10. In the vicinity of the main circuit switching devices 20, conductors 25, each of which has an inverted L shape when it is viewed from the side surface thereof, are arranged side by side with their arranging direction as the transverse direction thereof. A bus connecting terminal 71, which is connected to the fixed electrode rod 21 of the main circuit switching devices 20, projects from the back surface of the molded portion 60; and, a load side transmission cable connecting terminal 72, which is connected to the conductor 25, projects from the front surface of the molded portion 60. The bus connecting terminal 71 and load side transmission cable connecting terminal 72 are respectively aerial connecting terminals which are to be connected at right angles to a transmission cable; and, they are respectively connected to a bus 91 having an aerial connecting connector 91a and a transmission cable 92 having an aerial connecting connector 92a.

The buses 91, 91 and 91, which are respectively to be connected to the main circuit switching devices 20, 20 and 20 of the vacuum containers 10, 10 and 10 of one unit, are disposed so as to extend through the deep portion of the lower surface of the casing 80 and are arranged side by side in the transverse direction of the casing 80. The transmission cables 92, 92 and 92 to be connected their associated conductors 25 are disposed so as to extend through the front portion of the lower surface of the casing 80, are arranged side by side in the transverse direction of the casing 80, and are introduced into the interior portion of the casing 80 from the bottom portion thereof. Also, in the present embodiment, the equivalent parts or similar parts thereof to those in the embodiment 19 are given the same designations and thus the description thereof is omitted here.

Thereof, the present embodiment can be applied to a wiring pattern in which, in the deep and front portions of the casing 80, the buses 91 and transmission cables 92 are arranged side by side in the transverse direction of the casing 80, while the buses 91 and transmission cables 92 are respectively introduced from the lower surface of the casing 80.

Also, it is possible to connect the connectors 91a and 92a respectively to the bus connecting terminal 71 and load side transmission cable connecting terminal 72 from above and, therefore, the present embodiment can also be adapted to a wiring pattern in which the buses 91 and transmission cables 92 are introduced from above the casing 80.

Further, since the bus and load side terminals have the same terminal shape, the present embodiment can also be adapted to a wiring pattern in which the buses 91 and transmission cables 92 are reversed.

### (Embodiment 20)

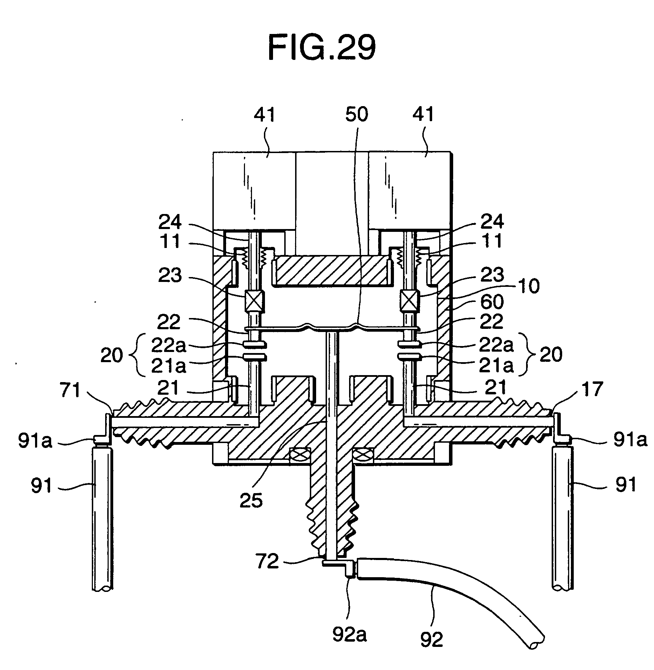

Now, Fig. 29 is a side section view of the structure of the main portions of an embodiment 20 of a switch gear.

In the present embodiment, main circuit switching devices 20, 20 are disposed respectively in the front and rear portions of the interior portion of the vacuum container 10 with their longitudinal direction as the vertical direction of the casing 80. The fixed electrodes 21a, 21a and movable electrodes 22a of the main circuit switching devices 20, 20 are situated respectively on the lower side and on the upper side; and, operation portions 41, 41 for driving the main circuit switching devices 20, 20 are respectively installed on the upper surface of the vacuum container 10. Bus connecting terminals 71, 71 which are connected to the fixed electrode rods 21, 21 of the main circuit switching devices 20, 20 project respectively from the front surface and back surface of the molded portion 60. Centrally between the two main circuit switching devices 20, 20, there is interposed a conductors 25 which is formed long in the vertical direction; and, to the lower end portion of the conductor 25, there is connected a load side transmission cable connecting terminal 72 which projects from the lower surface of the molded portion 60. The upper end portion of the conductor 25 is connected to the movable electrode rods 22, 22 of the two main circuit switching devices 20, 20 respectively by a flexible conductor 50. Also, the bus connecting terminals 71 and load side transmission cable connecting terminal 72 are respectively aerial connecting terminals which are to be connected at right angles to a transmission cable; and, in more particular, the bus connecting terminals 71 are respectively connected to buses 91, 91 respectively having aerial connecting connectors 91a, 91a in the leading ends thereof, and the load side transmission cable connecting terminal 72 is connected to a transmission cable 92 having an aerial connecting connector 91a in the leading end thereof.

The buses 91, 91, 91, which are connected to the main circuit switching devices 20, 20, 20 situated on the deep side of the interior portion of their associated vacuum containers 10, 10, 10 of one unit, are disposed so as to extend through the deep portion of the lower surface of the casing 80, are arranged in the transverse direction of the casing 80, and are introduced into the casing 80 from the bottom portion thereof. Similarly, the buses 91, 91, 91, which are connected to the main circuit switching devices 20, 20, 20 on the front side, are disposed so as to extend through the front portion of the lower surface of the casing 80, are arranged in the transverse direction of the casing 80, and are introduced into the casing 80 from the bottom portion thereof. Also, in the central portions of the buses 91, 91 on the front and deep sides, the transmission cables 92, 92, 92 to be connected to the conductors 25, 25, 25 are respectively disposed so as to extend through the central portion of the lower surface of the casing 80, are arranged in the transverse direction of the casing 80, are curved in the interior portion of the casing 80, and are connected at right angles to the load side transmission cable connecting terminals 72. Also, in the present embodiment, the equivalent parts or similar parts thereof to those in the embodiment 20 are given the same designations and thus the description thereof is omitted here.

Therefore, by driving the two main circuit switching devices 20, 20, power feed can be selected from the two buses 91, 91, thereby being able to switch the power supply.

### (Embodiment 21)

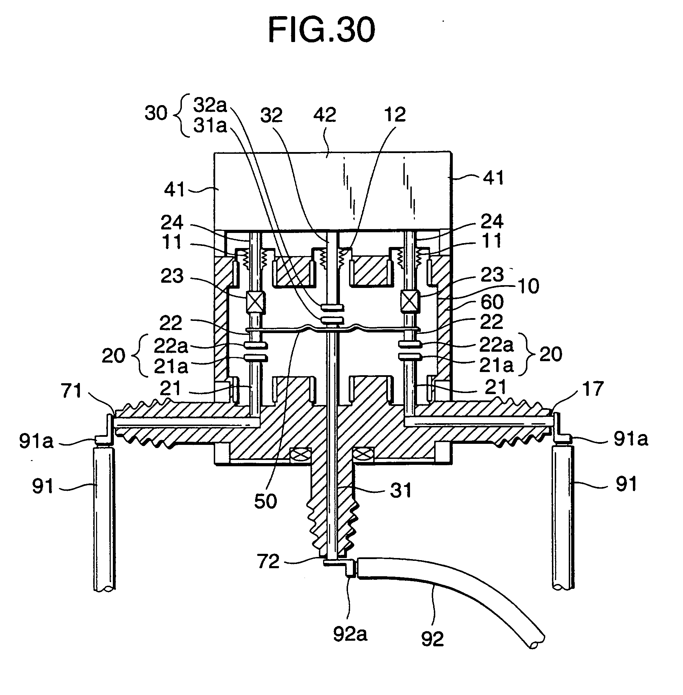

Now, Fig. 30 is a side section view of the structure of the main portions of an embodiment 21 of a switch gear.

In the present embodiment, except for the conductor 25, the grounding switching device 30 is interposed in the intermediate portion of the two main circuit switching devices 20, 20. The main circuit switching device 20 is structured such that the movable electrode 22a thereof is situated on the upper side and the fixed electrode 21a thereof is situated on the lower side; and, between the movable electrode side of the two main circuit switching devices 20, 20 and the fixed electrode 31 of the grounding switching device 30, there are connected flexible conductors 50 respectively. Also, in the present embodiment, the equivalent parts or similar parts thereof to those in the embodiment 20 are given the same designations and thus the description thereof is omitted here.

Therefore, by driving the two main circuit switching devices 20, 20, power feed to the load side can be switched and, also, by driving the grounding switching device 30, the load side can be grounded.

### (Embodiment 22)

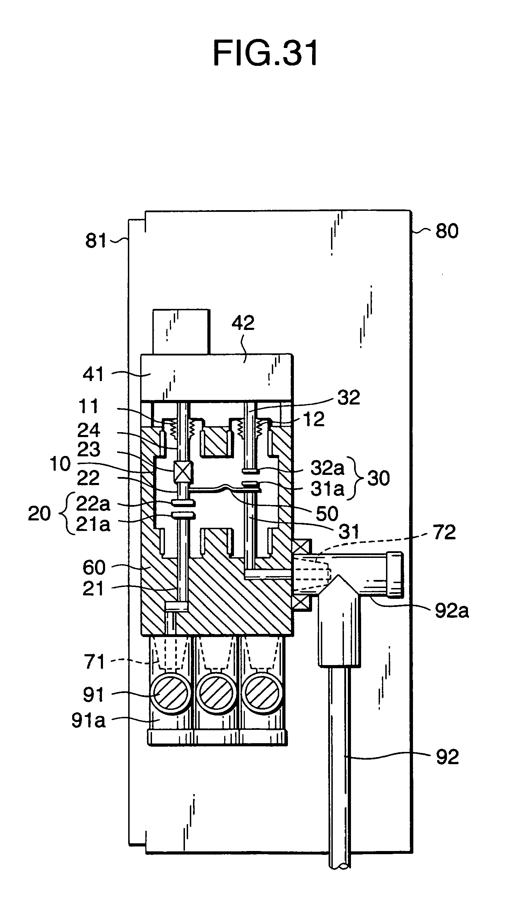

Now, Fig. 31 is a side section view of the structure of the main portions of an embodiment 22 of a switch gear.

In the present embodiment, the switch gear according to the embodiment 1 is reversed in the back-and-forth direction thereof and is then stored into the casing 80. The main circuit switching device 20 is disposed on the front side, the grounding switching device 30 is disposed on the deep side, the bus connecting terminal 71 is installed so as to extend downwardly from the front portion of the lower surface of the molded portion 60, and the load side transmission cable connecting terminal 72 is installed so as to extend backwardly from the lower portion of the back surface of the molded portion 60. Also, in the present embodiment, the equivalent parts or similar parts thereof to those in the embodiment 1 are given the same designations and thus the description thereof is omitted here.

Therefore, the present embodiment can be applied to a wiring pattern in which, on the front side of the upper portion of the interior portion of the casing 80, the buses are arranged side by side in the back-and-forth direction of the casing 80 and are wired in the transverse direction of the casing 80, while the load side transmission cables 92 are arranged side by side in the transverse direction of the casing 80 and are introduced from the bottom of the deep portion of the interior portion of the casing 80.

Also, since the vacuum container 10 is disposed in the vicinity of the door 81 of the casing 80, the operation to inspect the switching devices can be simplified.

### (Embodiment 23)

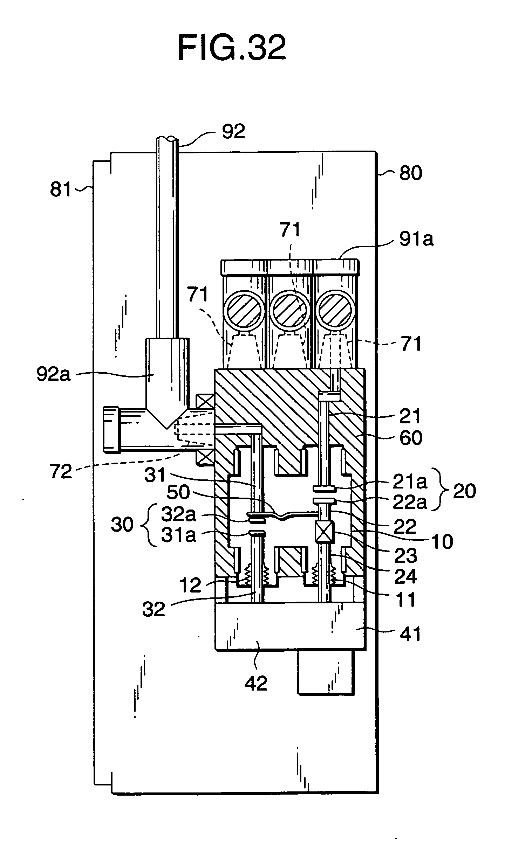

Now, Fig. 32 is a side section view of the structure of the main portions of an embodiment 23 of a switch gear.

In the present embodiment, the switch gear according to the embodiment 1 is turned upside down and is then stored into the casing 80. The fixed electrodes 21a and 31a of the main circuit switching device 20 and grounding switching device 30 are respectively disposed on the upper side, while the movable electrodes 22a and 32a of the main circuit switching device 20 and grounding switching device 30 are respectively disposed on the lower side. And, the bus connecting terminal 71 is installed so as to extend upwardly from the rear portion of the upper surface of the molded portion 60, and the load side transmission cable connecting terminal 72 is installed so as to extend forwardly from the upper portion of the front surface of the molded portion 60. Also, in the present embodiment, the equivalent parts or similar parts thereof to those in the embodiment 1 are given the same designations and thus the description thereof is omitted here.

Therefore, the present embodiment can be applied to a wiring pattern in which, on the rear side of the upper portion of the interior portion of the casing 80, the buses are arranged side by side in the back-and-forth direction of the casing 80 and are wired in the transverse direction of the casing 80, while the load side transmission cables 92 are arranged side by side in the transverse direction of the casing 80 and are introduced from the top surface of the front portion of the interior portion of the casing 80.

### (Embodiment 24)

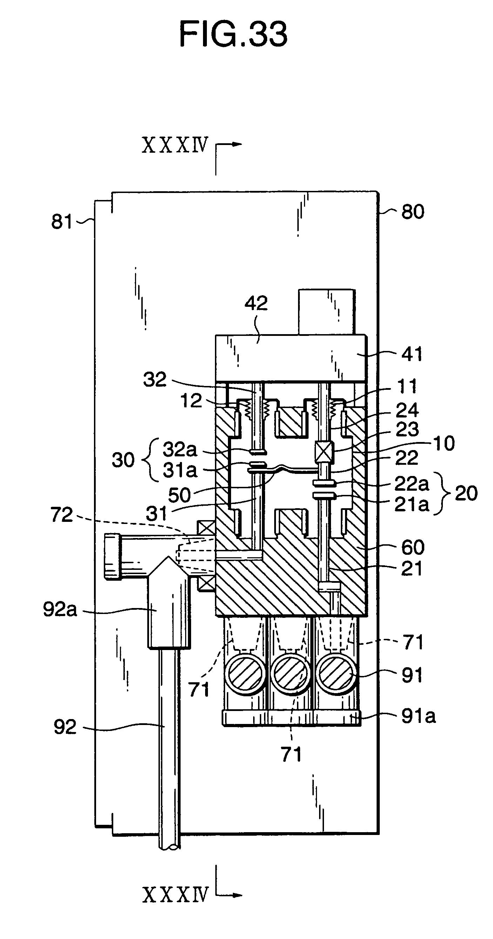

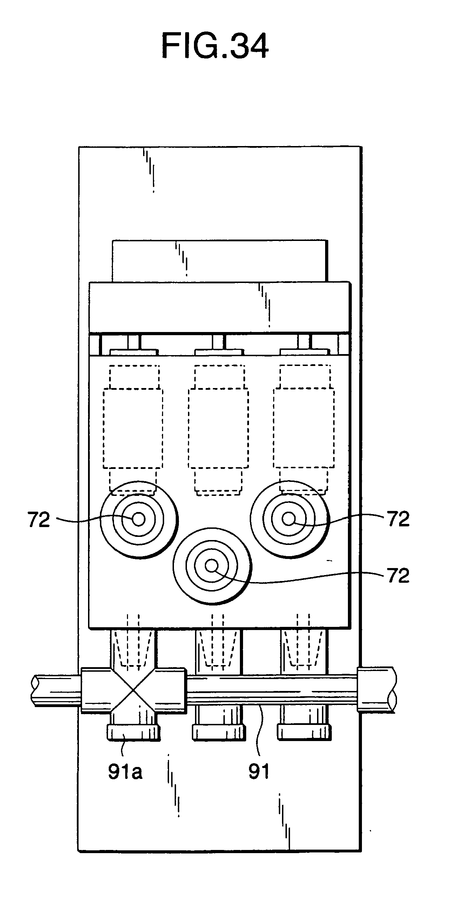

Now, Fig. 33 is a side section view of the structure of the main portions of an embodiment 24 of a switch gear, and Fig. 34 is a front section view taken along the line XXXIV-XXXIV shown in Fig. 33.

In the present embodiment, the dispositions of the load side transmission cable connecting terminals 72, 72, 72 in the embodiment 1 are changed: that is, the load side transmission cable connecting terminals 72, 72, 72 of one unit are disposed in such a manner that they form an inverted triangle when they are viewed from the front surfaces thereof. Also, in the present embodiment, the equivalent parts or similar parts thereof to those in the embodiment 1 are given the same designations and thus the description thereof is omitted here.

Therefore, in the present embodiment, when compared with a structure in which the load side transmission cable connecting terminals 72, 72, 72 are arranged laterally in a row, the terminals 72 can be made to approach one another in the transverse direction of the casing 80, which makes it possible to make the switch gear compact.

### (Embodiment 25)

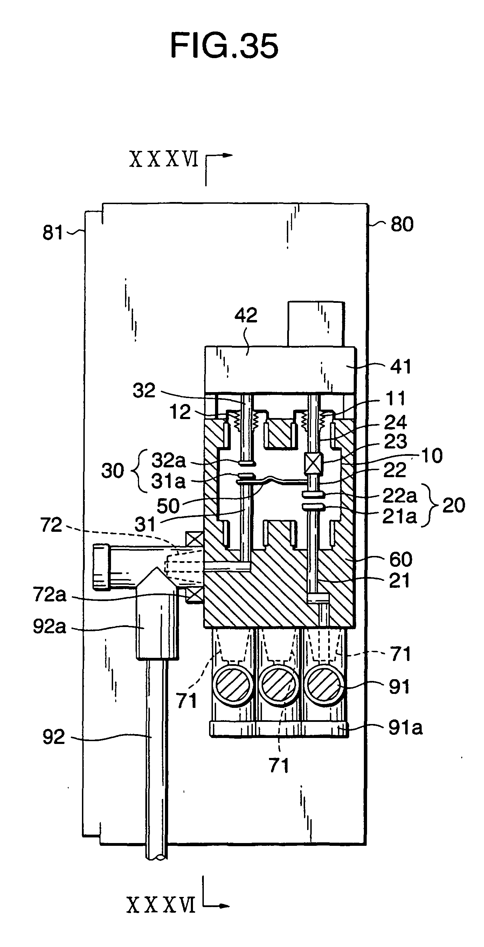

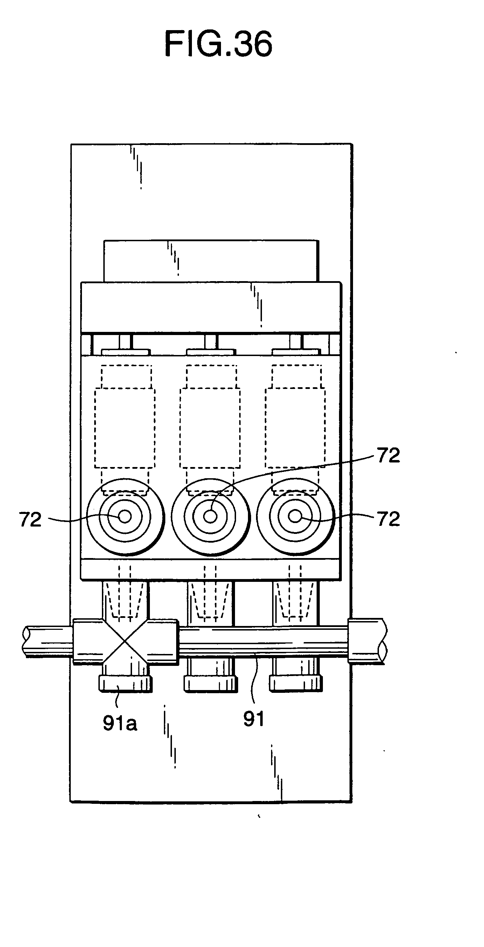

Now, Fig. 35 is a side section view of the structure of the main portions of an embodiment 25 of a switch gear, and Fig. 36 is a front section view taken along the line XXXVI-XXXVI shown in Fig. 35.

In the present embodiment, the installation portions of the load side transmission cable connecting terminals 72, 72, 72 of the molded portion 60 are respectively formed in a recessed portion. Also, in the present embodiment, the equivalent parts or similar parts thereof to those in the embodiment 1 are given the same designations and thus the description thereof is omitted here.

Therefore, the projecting amounts of the load side transmission cable connecting terminals 72, 72, 72 from the molded portion 60 can be reduced, which makes it possible to make the switch gear compact.

As has been described heretofore in detail, with use of a switch gear according to a 1^{st} embodiment of the invention, since one or more switching devices are stored in a molded vacuum container and terminals for connection with external conductors are projected directly from the molded portion, no bushing is necessary and thus, when compared with a conventional switch gear, a switch gear according to the invention can be greatly reduced in size.

Also, because the external conductor connecting terminals are directly disposed in the molded portion, no packing for sealing is necessary, which makes it possible to prevent the occurrence of a poor airtight condition in the switch gear.

And, with use of a switch gear according to 2nd to 21st aspects of the invention, terminals respectively used to be connected to external conductors are projected in various directions with respect to the operation direction of switching operation of the switching device, whereby the present switch gear can be flexibly adapted to various wiring patterns of the transmission cables of the external conductors.

Also, by changing the arranging pattern of the terminals, the switch gear can be changed variously in shape. Therefore, even in case where a switch gear is to be installed in a space which is limited in height and depth, the present switch gear can be applied flexibly to such case.

Also, since the portion of the switch gear that must be inspected highly frequently is disposed on the door side of the casing, the inspecting operation of the present switch gear can be simplified.

With use of a switch gear according to an embodiment of the invention, because the installation portion of the terminal of the molded portion is formed in a recessed portion, the switch gear can be made further compact.

Now, description will be given below of embodiments of a special-height metal closed type switch gear with reference to the accompanying drawings.

### (Embodiment 26)

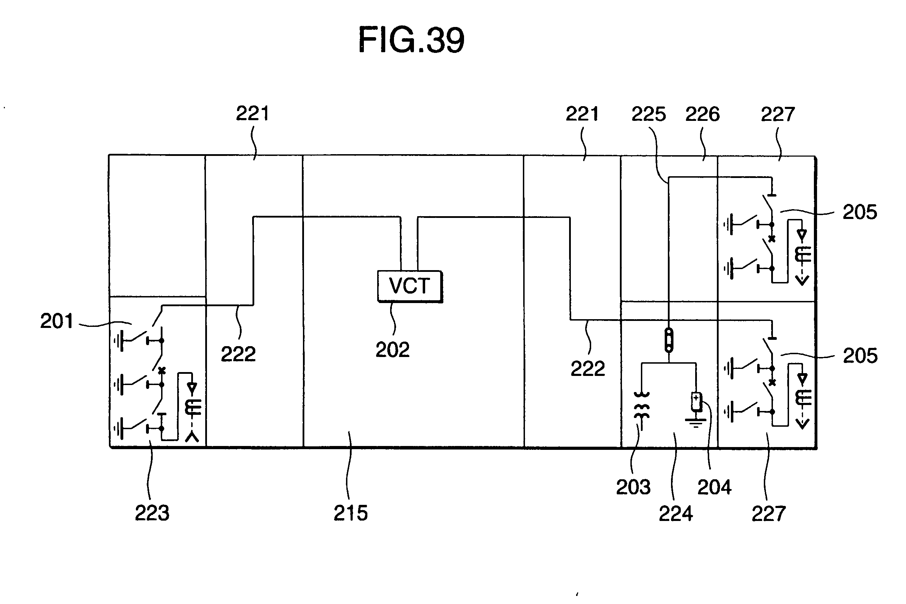

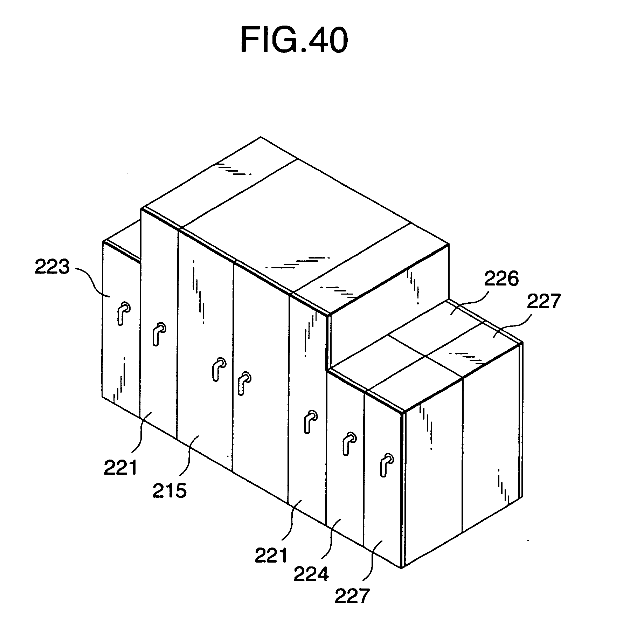

Fig. 39 is a skeleton view (plan structure view) of a one-circuit power receiving system employed in a special-height metal closed type switch gear according to an embodiment 26, and Fig. 40 is a perspective view of the appearance of the special-height metal closed type switch gear shown in Fig. 39.

In Figs. 39 and 40, on the two sides of a VCT panel 215 with a VCT 202 stored therein, there are disposed two VCT connecting panels 221. In the VCT connecting panels 221, there are stored two connecting conductors 222, respectively. Next to one of the two VCT connecting panels 221, there is disposed an incoming panel 223 in which a power receiving part 201 is stored.

Next to the other VCT connecting panel 221, there are disposed a meter transformer and lightning conductor 224, in which a meter transformer 203 and a lightning conductor 204 are stored, and a bus converting panel 226 in which a connecting bus 225 is stored. Adjacently to the meter transformer and lightning conductor 224 and bus converting panel 226, there are respectively disposed two feeder panels 227 in each of which there is stored a feeder part 205.

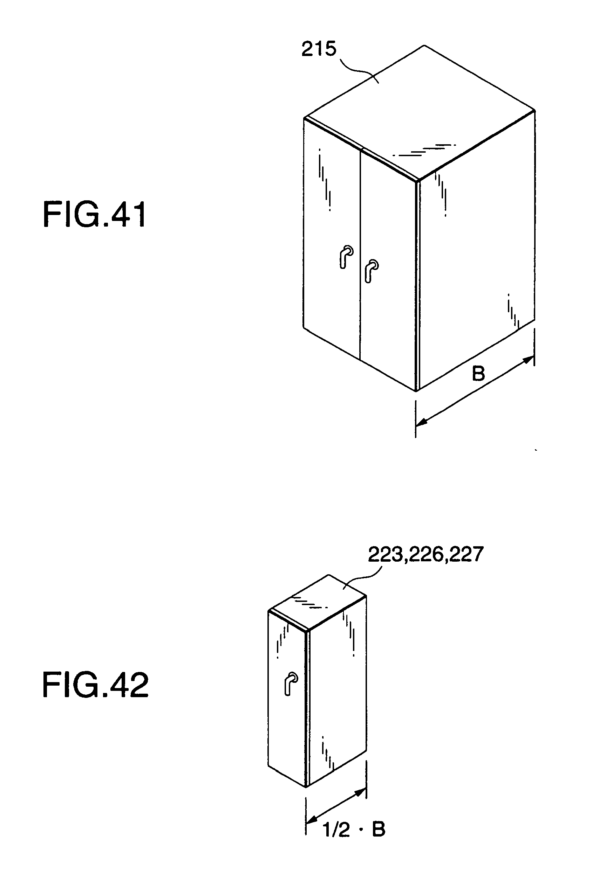

Also, as shown in Fig. 41, the VCT panel 215 has a depth dimension B. On the other hand, as shown in Fig. 42, the depth dimensions of the meter transformer and lightning conductor 224, bus converting panel 226 and feeder panels 227 are respectively set equal to one half (1/2 B) of the depth dimension B of the VCT panel 215. Further, the height of the VCT connecting panel 221 is set equal to that of the VCT panel 215, whereas the height dimensions of the meter transformer and lightning conductor 224, bus converting panel 226 and feeder panel 227 are respectively set smaller than that of the VCT panel 215.

The meter transformer and lightning conductor 224 and bus converting panel 226 are disposed opposed to each other in such a manner that their respective back surfaces face each other. Similarly, the two feeder panels 227 are also disposed opposed to each other with their respective back surfaces facing each other. The power receiving part 201, devices stored in the interior portion of the meter transformer and lightning conductor 224, and feeder parts 205 are similar in the circuit configuration to that shown in Fig. 47. However, these parts are reduced in size over the conventional parts and they are also structured in such a manner that they can be maintained from the front surface sides of their respective panels.

In the thus structured special-height metal closed type switch gear, the incoming panel 223, feeder panels 227, meter transformer and lightning conductor 224 and bus converting panel 226 are disposed in a row with their respective back surfaces facing one another and are situated through the VCT connecting panels 221 on the lateral sides of the VCT panel 215 which is large in the depth dimension; and, therefore, they can be disposed in a row with high efficiency and in a compact manner, which in turn can reduce the size of the switch gear as a whole and thus can reduce the manufacturing cost thereof. Also, since the incoming panel 223, feeder panels 227 and meter transformer and lightning conductor panel 224 are disposed in two rows with their respective back surfaces facing each other, the freedom of structure of buses can be enhanced to thereby be able to arrange the switch gear with enhanced flexibility.

Here, in case where there is employed such back-to-back arrangement as in the embodiment 26, it is necessary to secure two spaces respectively on the front and back sides of the switch gear for opening the respective doors of these panels. However, even in the conventional switch gear, it is necessary to secure a space for maintenance on the back surface side of the switch gear. That is, so far as this space is concerned, with use of the present back-to-back arrangement, there is found no new restriction on the installation site of the switch gear.

### (Embodiment 27)

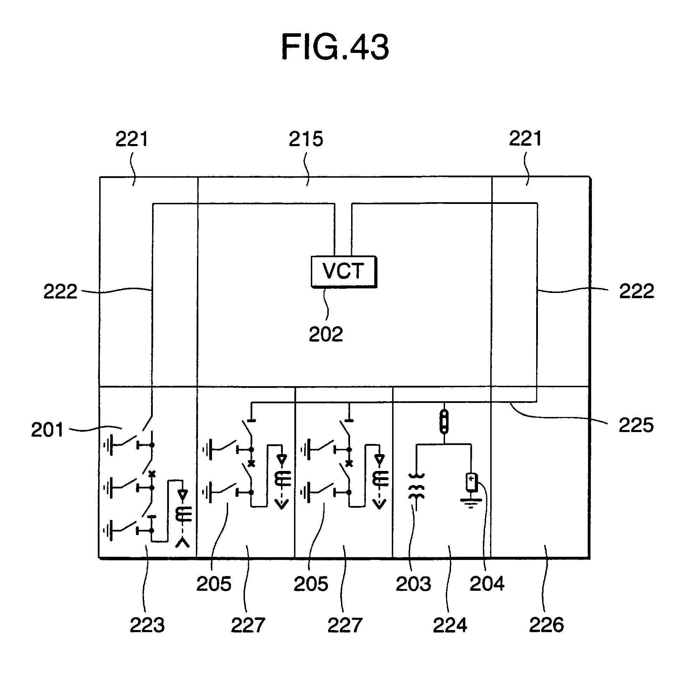

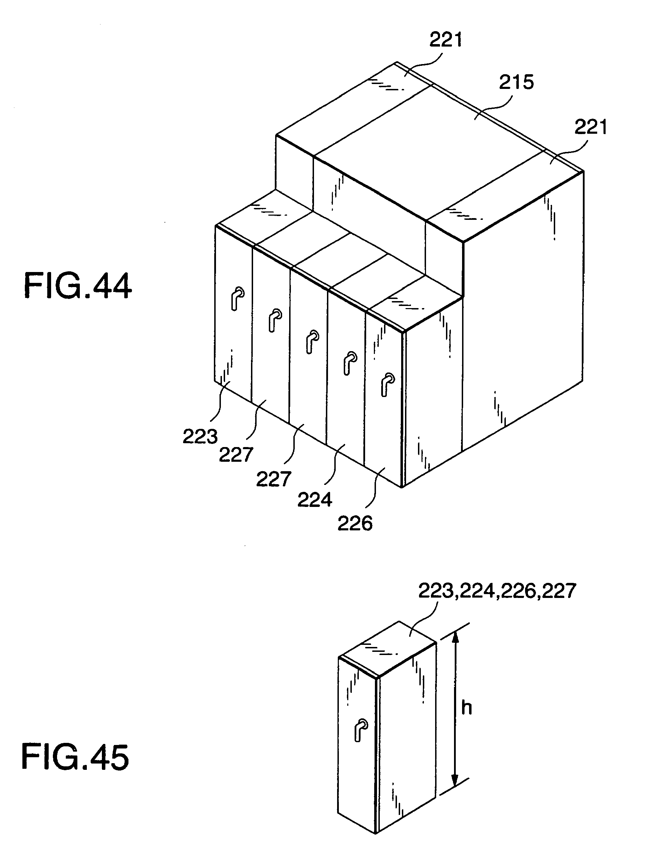

Next, Fig. 43 is a skeleton view of a one-circuit power receiving system employed in a special-height metal closed type switch gear according to an embodiment 27, and Fig. 44 is a perspective view of the appearance of the special-height metal closed type switch gear shown in Fig. 43.

In the present embodiment, the incoming panel 223 and bus converting panel 226 are respectively disposed in such a manner that their back surfaces respectively face the back surfaces of their associated VCT connecting panels 221; and, between the incoming panel 223 and bus converting panel 226, the meter transformer and lightning conductor panel 224 and two feeder panels 227 are disposed in such a manner that their back surfaces respectively face the back surface of the VCT panel 215.

In the thus structured special-height metal closed type switch gear, the incoming panel 223, feeder panels 227, meter transformer and lightning conductor panel 224 and bus converting panel 226 are disposed in a row in such a manner that their back surfaces respectively face the back surface of the VCT panel 215 having a large width dimension, and are connected together through the VCT connecting panels 221; and, therefore, these panels can be disposed in a row with enhanced efficiency and in a compact manner, which in turn can reduce the size of the switch gear as a whole and thus can reduce the manufacturing cost thereof. Also, since the incoming panel 223, feeder panels 227 and meter transformer and lightning conductor panel 224 are disposed in two rows with their respective back surfaces facing each other, the freedom of structure of buses can be enhanced to thereby be able to arrange the switch gear with enhanced flexibility.

By the way, in the embodiments 26 and 27, the VCT panel 215 and VCT connecting panels 221 are structured as separate panels. However, the VCT panel 215 and VCT connecting panels 221 may also be structured in such a manner that they are unified as an integrated body.

Also, in the embodiments 26 and 27, the height dimensions of the incoming panel 223, feeder panels 227, meter transformer and lightning conductor panel 224 and bus converting panel 226 are respectively set smaller than those of the VCT panel 215 and VCT connecting panels 221. However, the heights of the former can also be set equal to those of the latter.

Further, in the embodiments 26 and 27, the depth dimensions of the incoming panel 223, feeder panels 227, meter transformer and lightning conductor panel 224 and bus converting panel 226 are all set equal to one half of that of the VCT panel 215. However, all of the depth dimensions of the former are not always set in this manner but only part of them may be reduced in size. Also, the depth dimensions of the former may also be set smaller than one half of that of the VCT panel 215.

### (Embodiment 28)

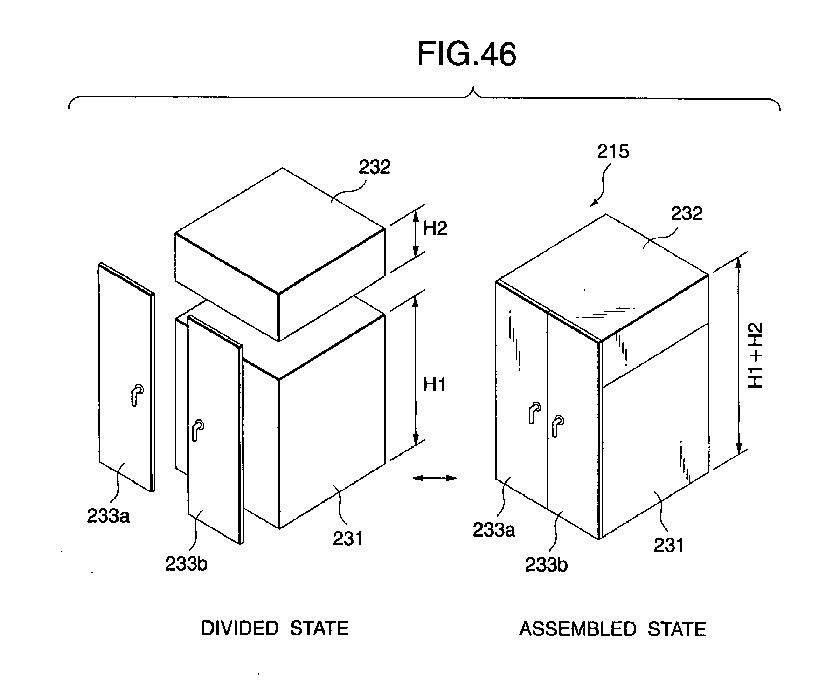

Next, Fig. 45 is a perspective view of an incoming panel, two feeder panels, a meter transformer and lightning conductor and a bus converting panel respectively employed in a special-height metal closed type switch gear according to an embodiment 28, and Fig. 46 is an explanatory view of the divided and assembled states of a box body forming a VCT panel used in the special-height metal closed type switch gear shown in Fig. 45.

In the present embodiment, the height dimensions of the incoming panel 223, feeder panels 227, meter transformer and lightning conductor panel 224 and bus converting panel 226 are respectively set equal to or smaller than 1900 mm. Also, the box body of the VCT panel 215 is structured in such a manner that it can be divided to two division body bodies 231, 232 and two doors 233a, 233b. And, the height dimensions of the box bodies 231, 232 are respectively set equal to or less than 1900 mm.

In the VCT panel 215, there is contained a VCT 202 (see Fig. 39). And, the VCT 202 is a part which is supplied from a power company, and it is similar in structure to that employed in the embodiment 26. Also, in case where there are used such VCT connecting panels 221 as in the embodiment 26 or 27, the height dimensions of the VCT connecting panels 221 may be set equal to or less than 1900 mm, or the box bodies of the VCT connecting panels 221 may be structured in such a manner that they can be divided to division box bodies each having a height dimension equal to or smaller than 1900 mm.

In the thus structured special-height metal closed type switch gear, the height dimensions of the incoming panel 223, feeder panels 227, meter transformer and lightning conductor panel 224 and bus converting panel 226 are respectively set equal to or smaller than 1900 mm; and, the box bodies of the VCT panel 215 and VCT connecting panels 221 are respectively structured in such a manner that they can be divided to division box bodies each having a height dimension equal to or smaller than 1900 mm. Thanks to this, when these panels are carried into a site for installation, it is possible to use an elevator to thereby eliminate the need for provision of facilities such as a crane, which makes it possible to reduce the cost of the switch gear.

By the way, in the embodiment 28, the box body of the VCT panel 215 is divided to the two division box bodies. However, it is also possible to divide the VCT panel 215 to three or more division box bodies.

As has been described heretofore, in a special-height metal closed type switch gear of a plurality of panels including at least any one of an incoming panel, a feeder panel, and a meter transformer and lightning conductor panel, the depth dimension of at least part of these panels is set equal to or smaller than one half of the depth dimension of a power supply-demand meter transformer panel; and, of all panels, at least part of them are disposed opposed to each other in such a manner that their back surfaces face each other. Thanks to this, the whole of the switch gear can be reduced in size and thus the manufacturing cost thereof can be reduced, but also the arrangement of the switch gear can be carried out with flexibility.

In a special-height metal closed type switch gear, since devices disposed in the interior portions of the back-to-back disposed panels are structured such that they can be maintained from the front surfaces of their respective panels, operations necessary for maintenance thereof can be facilitated.

In a special-height metal closed type switch gear, on the two sides of a power supply-demand meter transformer panel, there are disposed two VCT connecting panels respectively storing therein connecting conductors used to connect the power supply-demand meter transformer panel to a meter transformer and lightning conductor panel. Thanks to this, the arrangement of the panels can be carried out with flexibility.

In a special-height metal closed type switch gear, there are provided a meter transformer and lightning conductor panel, two feeder panels, and a bus converting panel for connecting the meter transformer and lightning conductor panel to one of the two feeder panels, the depth dimensions of the meter transformer and lightning conductor panel, two feeder panels and bus converting panel are respectively set equal to or smaller than one half of the depth dimension of a power supply-demand meter transformer panel, the meter transformer and lightning conductor panel and bus converting panel are, adjacently to one of two VCT connecting panels, disposed opposed to each other in such a manner that their respective back surfaces face each other, and, adjacently to the meter transformer and lightning conductor panel and bus converting panel, the two feeder panels are disposed opposed to each other in such a manner that their respective back surfaces face each other. Thanks to this, the respective panels can be disposed with high efficiency and the whole of the switch gear can be made compact.

In a special-height metal closed type switch gear, there are provided a meter transformer and lightning conductor panel, two feeder panels, and a bus converting panel for connecting the meter transformer and lightning conductor panel to one of two feeder panels, the depth dimensions of the meter transformer and lightning conductor panel, two feeder panels and bus converting panel are respectively set equal to or smaller than one half of the depth dimension of a power supply-demand meter transformer panel, an incoming panel and bus converting panel are respectively disposed in such a manner that their respective back surfaces face the back surfaces of their associated VCT connecting panels, and, between the incoming panel and bus converting panel, the meter transformer and lightning conductor panel and two feeder panels are disposed in such a manner that their respective back surfaces face the back surface of the power supply-demand meter transformer panel. Thanks to this, the respective panels can be disposed with high efficiency and the whole of the switch gear can be made compact.

In a special-height metal closed type switch gear, the height dimensions of an incoming panel, two feeder panels and a meter transformer and lightning conductor panel are respectively set equal to or smaller than 1900 mm, and the box body of a power supply-demand meter transformer panel is structured so that it can be divided to division box bodies each having a height dimension equal to or smaller than 1900 mm. This makes it possible to use an ordinary elevator to thereby eliminate the need for provision of facilities such as a crane, which in turn can reduce the cost of the switch gear.

## Claims

1. A switch gear comprising:
a vacuum container (10); and
one or more switching devices (20, 30) respectively stored in said vacuum container (10) for contacting a fixed electrode (21a, 31a) with a movable electrode (22a, 32a) and disconnecting thereof from each other, said fixed and movable electrodes respectively being connected to different external conductors (91a),
**characterised in that**
said switching devices (20, 30) being molded together with said vacuum container (10) by an insulator; and
a plurality of terminals (71, 72) respectively disposed within said vacuum container (10) to be connected to external conductors (91a) being projected from said molded portion (60) .

2. The switch gear as set forth in claim 1, wherein
said vacuum container (10) includes;
a plurality of vacuum containers disposed side by side,
a plurality of switching devices (20, 30) to be operated in the same direction in case of being switched are disposed side by side within each vacuum container,
terminals (71, 72) to be connected to first external conductors are projected in the same direction as said operation direction of the switching operations of said switching devices, and are disposed in a direction crossing said projecting direction thereof so that said terminals (71, 72) are different in position from one another in said associated vacuum containers,
terminals (71, 72) to be connected to second external conductors through T-type or L-type connectors (91a) are projected in a direction crossing the operation direction, and are disposed so that said terminals (71, 72) are coincident in position with one another in said associated vacuum containers.

3. The switch gear as set forth in claim 1, wherein
said vacuum container (10) includes;
a plurality of vacuum containers disposed side by side,
a plurality of switching devices (20, 30) to be operated in the same direction when they are switched are disposed side by side within each vacuum container,
terminals (71, 72) to be connected to first external conductors are projected in a direction different from the operation direction of the switching operations of said switching devices, and are disposed in a direction crossing the projecting direction thereof so that said terminals (71, 72) are different in position from one another in said associated vacuum containers, and
terminals (71, 72) to be connected to second external conductors through T-type or L-type connectors are projected in the opposite direction to the projecting direction of said first external conductors, and are disposed so that said terminals (71, 72) are coincident in position with one another in said associated vacuum containers.

4. The switch gear as set forth in claim 1, wherein
said vacuum container (10) includes;
a plurality of vacuum containers disposed side by side,
a plurality of switching devices (20, 30) to be operated in the same direction in case of being switched are disposed side by side within each vacuum container,
terminals (71, 72) to be connected to first external conductors are projected in the same direction as the operation direction of the switching operations of said switching devices, and are disposed in a direction crossing the projecting direction thereof so that said terminals (71, 72) are different in position from one another in said associated vacuum containers,
terminals (71, 72) to be connected to second external conductors through T-type or L-type connectors are projected in a direction crossing the operation direction, and are disposed in a direction crossing the projecting direction so that said terminals (71, 72) are different in position from one another in said associated vacuum containers.

5. The switch gear as set forth in claim 1, wherein
said vacuum container (10) includes;
a plurality of vacuum containers disposed side by side,
a plurality of switching devices (20, 30) to be operated in the same direction when they are switched are disposed side by side,
terminals (71, 72) to be connected to first external conductors are projected in a direction different from the operation direction of the switching operations of said switching devices, and are disposed in a direction crossing the projecting direction thereof so that said terminals (71, 72) are different in position from one another in said associated vacuum containers, and
terminals (71, 72) to be connected to second external conductors through T-type or L-type connectors (92a) are projected in the opposite direction to the projecting direction of said first external conductors, and are disposed in a direction crossing the projecting direction so that said terminals are coincident in position with one another in said associated vacuum containers.

6. The switch gear as set forth in claim 1, wherein
said vacuum container (10) includes;
a plurality of vacuum containers disposed side by side,
a plurality of switching devices (20, 30) to be operated in the same direction in case of being switched are disposed side by side within each vacuum container,
terminals (71, 72) to be connected to first external conductors are projected in the same direction as the operation direction of the switching operations of said switching devices, and are disposed in a direction crossing the projecting direction thereof so that said terminals (71, 72) are different in position from one another in said associated vacuum containers, and
aerial connecting terminals to be connected at a given angle to second external conductors are projected in a direction crossing the operation direction.

7. The switch gear as set forth in claim 1, wherein
said vacuum container (10) includes;
a plurality of vacuum containers disposed side by side,
a plurality of switching devices (20, 30) to be operated in the same direction in case of being switched are disposed side by side within each vacuum container,
terminals (71, 72) to be connected to first external conductors are projected in a direction crossing the operation direction of the switching operations of said switching devices, and are disposed in a direction crossing the projecting direction thereof so that said terminals (71, 72) are different in position from one another in said associated vacuum containers, and
terminals (71, 72) to be connected to second external conductors through T-type or L-type connectors (92a) are projected in the opposite direction as the operation direction, and are disposed so that said terminals are coincident in position with one another in said associated vacuum containers.

8. The switch gear as set forth in claim 1, wherein
said vacuum container (10) includes;
a plurality of vacuum containers disposed side by side and, in each vacuum container,
aerial connecting terminals to be connected at a given angle to said first external conductors are projected in a direction crossing the operation direction of the switching operations of said switching devices respectively connected to said first external conductors and second external conductors, and
aerial connecting terminals to be connected at a given angle to said second external conductors are projected in the opposite direction to said projecting direction of said first external conductor connecting terminals.

9. The switch gear as set forth in claim 1, wherein
said vacuum container (10) includes;
a plurality of vacuum containers disposed side by side,
a plurality of switching devices (20, 30) to be operated in the same direction in case of being switched are disposed side by side within each vacuum container,
aerial connecting terminals to be connected at a given angle to first external conductors are projected in a direction crossing the operation direction of the switching operations of said switching devices,
aerial terminals to be connected at a given angle to second external conductors are projected in the opposite direction to the projecting direction of said first external conductor connecting terminals, and
aerial terminals to be connected at a given angle to third external conductors are projected in a direction crossing the projecting direction of said first and second external conductor connecting terminals.

## Patentansprüche

1. Schalteinrichtung, mit:
einem Vakuumbehälter (10); und
einer oder mehreren Schaltvorrichtungen (20, 30), die jeweils in dem Vakuumbehälter (10) gelagert sind, zum Kontaktieren einer festen Elektrode (21a, 31a) mit einer bewegbaren Elektrode (22a, 32a) und zum Trennen davon voneinander, wobei die feste beziehungsweise die bewegbare Elektrode mit unterschiedlichen äußeren Leitern (91a) verbunden sind,
**dadurch gekennzeichnet, dass**
die Schaltvorrichtungen (20, 30) mit dem Vakuumbehälter (10) durch einen Isolator zusammen ausgeformt sind; und
wobei eine Vielzahl von Anschlüssen (71, 72) jeweils innerhalb des Vakuumbehälters (10) angeordnet ist, um mit äußeren Leitern (91a) verbunden zu werden, die von dem ausgeformten Abschnitt (60) vorstehen.

2. Schalteinrichtung nach Anspruch 1, wobei
der Vakuumbehälter (10) umfasst:
eine Vielzahl von Vakuumbehältern, die Seite an Seite angeordnet sind,
wobei eine Vielzahl von Schaltvorrichtungen (20, 30), die in die gleiche Richtung zu betätigen sind, in dem Fall, dass sie umgeschaltet werden, Seite an Seite innerhalb von jedem Vakuumbehälter angeordnet ist,
wobei Anschlüsse (71, 72), die mit ersten äußeren Leitern zu verbinden sind, in die gleiche Richtung vorstehen wie die Betätigungsrichtung der Schaltbetätigungen von den Schaltvorrichtungen, und wobei sie in einer Richtung angeordnet sind, welche die vorstehende Richtung davon kreuzt, so dass sich die Anschlüsse (71, 72) in der Position voneinander unterscheiden, in den zugehörigen Vakuumbehältern,
wobei Anschlüsse (71, 72), die mit zweiten äußeren Leitern durch T- oder L-Verbinder (91a) zu verbinden sind, in eine Richtung vorstehen, welche die Betätigungsrichtung kreuzt, und
wobei sie angeordnet sind, so dass die Anschlüsse (71, 72) in der Position miteinander zusammenfallen, in den zugehörigen Vakuumbehältern.

3. Schalteinrichtung nach Anspruch 1, wobei
der Vakuumbehälter (10) umfasst:
eine Vielzahl von Vakuumbehältern, die Seite an Seite angeordnet sind,
wobei eine Vielzahl von Schaltvorrichtungen (20, 30), die in die gleiche Richtung zu betätigen sind, wenn sie umgeschaltet werden, Seite an Seite innerhalb von jedem Vakuumbehälter angeordnet ist,
wobei Anschlüsse (71, 72), die mit ersten äußeren Leitern zu verbinden sind, in eine Richtung vorstehen, die sich von der Betätigungsrichtung der Schaltbetätigungen von den Schaltvorrichtungen unterscheidet, und wobei sie in einer Richtung angeordnet sind, welche die vorstehende Richtung davon kreuzt, so dass sich die Anschlüsse (71, 72) in der Position voneinander unterscheiden, in den zugehörigen Vakuumbehältern, und
wobei Anschlüsse (71, 72), die mit zweiten äußeren Leitern durch T- oder L-Verbinder zu verbinden sind, in die entgegengesetzte Richtung zu der vorstehenden Richtung der ersten äußeren Leiter vorstehen, und wobei sie angeordnet sind, so dass die Anschlüsse (71, 72) in der Position miteinander zusammenfallen, in den zugehörigen Vakuumbehältern.

4. Schalteinrichtung nach Anspruch 1, wobei
der Vakuumbehälter (10) umfasst:
eine Vielzahl von Vakuumbehältern, die Seite an Seite angeordnet sind,
wobei eine Vielzahl von Schaltvorrichtungen (20, 30), die in die gleiche Richtung zu betätigen sind, in dem Fall, dass sie umgeschaltet werden, Seite an Seite innerhalb von jedem Vakuumbehälter angeordnet ist,
wobei Anschlüsse (71, 72), die mit ersten äußeren Leitern zu verbinden sind, in die gleiche Richtung vorstehen wie die Betätigungsrichtung der Schaltbetätigungen von den Schaltvorrichtungen, und wobei sie in einer Richtung angeordnet sind, welche die vorstehende Richtung davon kreuzt, so dass sich die Anschlüsse (71, 72) in der Position voneinander unterscheiden, in den zugehörigen Vakuumbehältern,
wobei Anschlüsse (71, 72), die mit zweiten äußeren Leitern durch T- oder L-Verbinder zu verbinden sind, in eine Richtung vorstehen, welche die Betätigungsrichtung kreuzt, und wobei sie in einer Richtung angeordnet sind, welche die vorstehende Richtung kreuzt, so dass sich die Anschlüsse (71, 72) in der Position voneinander unterscheiden, in den zugehörigen Vakuumbehältern.

5. Schalteinrichtung nach Anspruch 1, wobei
der Vakuumbehälter (10) umfasst:
eine Vielzahl von Vakuumbehältern, die Seite an Seite angeordnet sind,
wobei eine Vielzahl von Schaltvorrichtungen (20, 30), die in die gleiche Richtung zu betätigen sind, wenn sie umgeschaltet werden, Seite an Seite angeordnet ist,
wobei Anschlüsse (71, 72), die mit ersten äußeren Leitern zu verbinden sind, in eine Richtung vorstehen, die sich von der Betätigungsrichtung der Schaltbetätigungen von den Schaltvorrichtungen unterscheidet, und wobei sie in einer Richtung angeordnet sind, welche die vorstehende Richtung davon kreuzt, so dass sich die Anschlüsse (71, 72) in der Position voneinander unterscheiden, in den zugehörigen Vakuumbehältern, und
wobei Anschlüsse (71, 72), die mit zweiten äußeren Leitern durch T- oder L-Verbinder (92a) zu verbinden sind, in die entgegengesetzte Richtung zu der vorstehenden Richtung der ersten äußeren Leiter vorstehen, und wobei sie in einer Richtung angeordnet sind, welche die vorstehende Richtung kreuzt, so dass die Anschlüsse in der Position miteinander zusammenfallen, in den zugehörigen Vakuumbehältern.

6. Schalteinrichtung nach Anspruch 1, wobei
der Vakuumbehälter (10) umfasst:
eine Vielzahl von Vakuumbehältern, die Seite an Seite angeordnet sind,
wobei eine Vielzahl von Schaltvorrichtungen (20, 30), die in die gleiche Richtung zu betätigen sind, in dem Fall, dass sie umgeschaltet werden, Seite an Seite innerhalb von jedem Vakuumbehälter angeordnet ist,
wobei Anschlüsse (71, 72), die mit ersten äußeren Leitern zu verbinden sind, in die gleiche Richtung vorstehen wie die Betätigungsrichtung der Schaltbetätigungen von den Schaltvorrichtungen, und wobei sie in einer Richtung angeordnet sind, welche die vorstehende Richtung davon kreuzt, so dass sich die Anschlüsse (71, 72) in der Position voneinander unterscheiden, in den zugehörigen Vakuumbehältern, und
wobei Luftverbindungsanschlüsse, die in einem gegebenen Winkel mit zweiten äußeren Leitern zu verbinden sind, in eine Richtung vorstehen, welche die Betätigungsrichtung kreuzt.

7. Schalteinrichtung nach Anspruch 1, wobei
der Vakuumbehälter (10) umfasst:
eine Vielzahl von Vakuumbehältern, die Seite an Seite angeordnet sind,
wobei eine Vielzahl von Schaltvorrichtungen (20, 30), die in die gleiche Richtung zu betätigen sind, in dem Fall, dass sie umgeschaltet werden, Seite an Seite innerhalb von jedem Vakuumbehälter angeordnet ist,
wobei Anschlüsse (71, 72), die mit ersten äußeren Leitern zu verbinden sind, in eine Richtung vorstehen, welche die Betätigungsrichtung der Schaltbetätigungen von den Schaltvorrichtungen kreuzt, und wobei sie in einer Richtung angeordnet sind, welche die vorstehende Richtung davon kreuzt, so dass sich die Anschlüsse (71, 72) in der Position voneinander unterscheiden, in den zugehörigen Vakuumbehältern, und
wobei Anschlüsse (71, 72), die mit zweiten äußeren Leitern durch T- oder L-Verbinder (92a) zu verbinden sind, in die entgegengesetzte Richtung wie die Betätigungsrichtung vorstehen, und wobei sie angeordnet sind, so dass die Anschlüsse in der Position miteinander zusammenfallen, in den zugehörigen Vakuumbehältern.

8. Schalteinrichtung nach Anspruch 1, wobei
der Vakuumbehälter (10) umfasst:
eine Vielzahl von Vakuumbehältern, die Seite an Seite angeordnet sind, und in jedem Vakuumbehälter,
wobei Luftverbindungsanschlüsse, die in einem gegebenen Winkel mit den ersten äußeren Leitern zu verbinden sind, in eine Richtung vorstehen, welche die Betätigungsrichtung der Schaltbetätigungen von den Schaltvorrichtungen kreuzt, die mit den ersten äußeren Leitern beziehungsweise den zweiten äußeren Leitern verbunden sind, und
wobei Luftverbindungsanschlüsse, die in einem gegebenen Winkel mit den zweiten äußeren Leitern zu verbinden sind, in der entgegengesetzten Richtung zu der vorstehenden Richtung von den ersten äußeren Leiterverbindungsanschlüssen vorstehen.

9. Schalteinrichtung nach Anspruch 1, wobei
der Vakuumbehälter (10) umfasst:
eine Vielzahl von Vakuumbehältern, die Seite an Seite angeordnet sind,
wobei eine Vielzahl von Schaltvorrichtungen (20, 30), die in die gleiche Richtung zu betätigen sind, in dem Fall, dass sie umgeschaltet werden, Seite an Seite innerhalb von jedem Vakuumbehälter angeordnet sind,
wobei Luftverbindungsanschlüsse, die in einem gegebenen Winkel mit ersten äußeren Leitern zu verbinden sind, in eine Richtung vorstehen, welche die Betätigungsrichtung der Schaltbetätigungen von den Schaltvorrichtungen kreuzt,
wobei Luftanschlüsse, die in einem gegebenen Winkel mit den zweiten äußeren Leitern zu verbinden sind, in der entgegengesetzten Richtung zu der vorstehenden Richtung von den ersten äußeren Leiterverbindungsanschlüssen vorstehen, und
wobei Luftanschlüsse, die in einem gegebenen Winkel mit dritten äußeren Leitern zu verbinden sind, in eine Richtung vorstehen, welche die vorstehende Richtung von den ersten und den zweiten äußeren Leiterverbindungsanschlüssen kreuzt.

## Revendications

1. Installation de commutation comprenant :
un réservoir sous vide (10) ; et
un ou plusieurs dispositifs de commutation (20, 30) logés respectivement à l'intérieur dudit réservoir sous vide (10), qui sont prévus pour amener une électrode fixe (21a, 31a) à venir en contact avec une électrode mobile (22a, 32a), et pour les déconnecter l'une de l'autre, lesdites électrodes fixe et mobile étant connectées respectivement à différents conducteurs externes (91 a),
**caractérisée en ce que** :
lesdits dispositifs de commutation (20, 30) sont moulés en même temps que ledit réservoir sous vide (10) par un isolateur ; et
une pluralité de bornes (71, 72) disposée respectivement à l'intérieur dudit réservoir sous vide (10) en vue d'être connectée à des conducteurs externes (91a), se projette en saillie à partir de ladite portion moulée (60).

2. Installation de commutation selon la revendication 1, dans laquelle :
ledit réservoir sous vide (10) comprend ;
une pluralité de réservoirs sous vide disposés côte à côte,
une pluralité de dispositifs de commutation (20, 30) destinés à être amenés à fonctionner dans la même direction en cas de commutation, qui sont disposés côte à côte à l'intérieur de chaque réservoir sous vide,
des bornes (71, 72), destinées à être connectées à des premiers conducteurs externes, qui se projettent dans la même direction que ladite direction de fonctionnement des opérations de commutation desdits dispositifs de commutation, et qui sont disposées dans une direction qui coupe ladite direction de projection de ceux-ci, de telle sorte que lesdites bornes (71, 72) ont des positions différentes les unes par rapport aux autres à l'intérieur desdits réservoirs sous vide associés,
des bornes (71, 72), destinées à être connectées à des deuxièmes conducteurs externes par le biais de raccords de type T ou de type L (91a), qui se projettent dans une direction qui coupe la direction de fonctionnement, et qui sont disposées de telle sorte que lesdites bornes (71, 72) ont des positions qui coïncident les unes par rapport aux autres à l'intérieur desdits réservoirs sous vide associés.

3. Installation de commutation selon la revendication 1, dans laquelle :
ledit réservoir sous vide (10) comprend ;
une pluralité de réservoirs sous vide disposés côte à côte,
une pluralité de dispositifs de commutation (20, 30) destinés à être amenés à fonctionner dans la même direction en cas de commutation, qui sont disposés côte à côte à l'intérieur de chaque réservoir sous vide,
des bornes (71, 72), destinées à être connectées à des premiers conducteurs externes, qui se projettent dans une direction différente de la direction de fonctionnement des opérations de commutation desdits dispositifs de commutation, et qui sont disposées dans une direction qui coupe la direction de projection de ceux-ci, de telle sorte que lesdites bornes (71, 72) ont des positions différentes les unes par rapport aux autres à l'intérieur desdits réservoirs sous vide associés, et
des bornes (71, 72), destinées à être connectées à des deuxièmes conducteurs externes par le biais de raccords de type T ou de type L, qui se projettent dans une direction opposée à la direction de projection desdits premiers conducteurs externes, et qui sont disposées de telle sorte que lesdites bornes (72, 72) ont des positions qui coïncident les unes par rapport aux autres à l'intérieur desdits réservoirs sous vide associés.

4. Installation de commutation selon la revendication 1, dans laquelle:
ledit réservoir sous vide (10) comprend ;
une pluralité de réservoirs sous vide disposés côte à côte,
une pluralité de dispositifs de commutation (20, 30) destinés à être amenés à fonctionner dans la même direction en cas de commutation, qui sont disposés côte à côte à l'intérieur de chaque réservoir sous vide,
des bornes (71, 72), destinées à être connectées à des premiers conducteurs externes, qui se projettent dans la même direction que la direction de fonctionnement des opérations de commutation desdits dispositifs de commutation, et qui sont disposées dans une direction qui coupe ladite direction de projection de ceux-ci, de telle sorte que lesdites bornes (71, 72) ont des positions différentes les unes par rapport aux autres à l'intérieur desdits réservoirs sous vide associés,
des bornes (71, 72), destinées à être connectées à des deuxièmes conducteurs externes par le biais de raccords de type T ou de type L, qui se projettent dans une direction qui coupe la direction de fonctionnement, et qui sont disposées dans une direction qui coupe la direction de projection, de telle sorte que lesdites bornes (71, 72) ont des positions différentes les unes par rapport aux autres à l'intérieur desdits réservoirs sous vide associés.

5. Installation de commutation selon la revendication 1, dans laquelle :
ledit réservoir sous vide (10) comprend ;
une pluralité de réservoirs sous vide disposés côte à côte, une pluralité de dispositifs de commutation (20, 30) destinés à être amenés à fonctionner dans la même direction en cas de commutation, qui sont disposés côte à côte,
des bornes (71, 72), destinées à être connectées à des premiers conducteurs externes, qui se projettent dans une direction différente de la direction de fonctionnement des opérations de commutation desdits dispositifs de commutation, et qui sont disposées dans une direction qui coupe la direction de projection de ceux-ci, de telle sorte que lesdites bornes (71, 72) ont des positions différentes les unes par rapport aux autres à l'intérieur desdits réservoirs sous vide associés, et
des bornes (71, 72), destinées à être connectées à des deuxièmes conducteurs externes par le biais de raccords de type T ou de type L (92a), qui se projettent dans la direction opposée à la direction de projection desdits premiers conducteurs externes, et qui sont disposées dans une direction qui coupe la direction de projection, de telle sorte que lesdites bornes ont des positions qui coïncident les unes par rapport aux autres à l'intérieur desdits réservoirs sous vide associés.

6. Installation de commutation selon la revendication 1, dans laquelle :
ledit réservoir sous vide (10) comprend ;
une pluralité de réservoirs sous vide disposés côte à côte,
une pluralité de dispositifs de commutation (20, 30) destinés à être amenés à fonctionner dans la même direction en cas de commutation, qui sont disposés côte à côte à l'intérieur de chaque réservoir sous vide,
des bornes (71, 72), destinées à être connectées à des premiers conducteurs externes, qui se projettent dans la même direction que la direction de fonctionnement des opérations de commutation desdits dispositifs de commutation, et qui sont disposées dans une direction qui coupe la direction de projection de ceux-ci, de telle sorte que lesdites bornes (71, 72) ont des positions différentes les unes par rapport aux autres à l'intérieur desdits réservoirs sous vide associés, et
des bornes de connexion aérienne, destinées à être connectées à un angle donné à des deuxièmes conducteurs externes, qui se projettent dans une direction qui coupe la direction de fonctionnement.

7. Installation de commutation selon la revendication 1, dans laquelle :
ledit réservoir sous vide (10) comprend ;
une pluralité de réservoirs sous vide disposés côte à côte,
une pluralité de dispositifs de commutation (20, 30) destinés à être amenés à fonctionner dans la même direction en cas de commutation, qui sont disposés côte à côte à l'intérieur de chaque réservoir sous vide,
des bornes (71, 72), destinées à être connectées à des premiers conducteurs externes, qui se projettent dans une direction qui coupe la direction de fonctionnement des opérations de commutation desdits dispositifs de commutation, et qui sont disposées dans une direction qui coupe la direction de projection de ceux-ci, de telle sorte que lesdites bornes (71, 72) ont des positions différentes les unes par rapport aux autres à l'intérieur desdits réservoirs sous vide associés, et
des bornes (71, 72), destinées à être connectées à des deuxièmes conducteurs externes par le biais de raccords de type T ou de type L (92a), qui se projettent dans la direction opposée à la direction de fonctionnement, et qui sont disposées de telle sorte que lesdites bornes ont des positions qui coïncident les unes par rapport aux autres à l'intérieur desdits réservoirs sous vide associés.

8. Installation de commutation selon la revendication 1, dans laquelle :
ledit réservoir sous vide (10) comprend ;
une pluralité de réservoirs sous vide disposés côte à côte et, à l'intérieur de chaque réservoir sous vide,
des bornes de connexion aérienne, destinées à être connectées à un angle donné aux dits premiers conducteurs externes, qui se projettent dans une direction qui coupe la direction de fonctionnement des opérations de commutation desdits dispositifs de commutation qui sont connectés respectivement auxdits premiers conducteurs externes et aux dits deuxièmes conducteurs externes, et
des bornes de connexion aérienne, destinées à être connectées à un angle donné aux dits deuxièmes conducteurs externes, qui se projettent dans la direction opposée à ladite direction de projection desdites bornes de connexion de premiers conducteurs externes.

9. Installation de commutation selon la revendication 1, dans laquelle :
ledit réservoir sous vide (10) comprend ;
une pluralité de réservoirs sous vide disposés côte à côte,
une pluralité de dispositifs de commutation (20, 30) destinés à être amenés à fonctionner dans la même direction en cas de commutation, qui sont disposés côte à côte à l'intérieur de chaque réservoir sous vide,
des bornes de connexion aérienne, destinées à être connectées à un angle donné à des premiers conducteurs externes, qui se projettent dans une direction qui coupe la direction de fonctionnement des opérations de commutation desdits dispositifs de commutation,
des bornes de connexion aérienne, destinées à être connectées à un angle donné à des deuxièmes conducteurs externes, qui se projettent dans la direction opposée à la direction de projection desdites bornes de connexion de premiers conducteurs externes, et
des bornes de connexion aérienne, destinées à être connectées à un angle donné à des troisième conducteurs externes, qui se projettent dans une direction qui coupe la direction de projection desdites bornes de connexion de premiers et deuxièmes conducteurs externes.
